# EUROPEAN PATENT SPECIFICATION

(11) **EP 3 193 555 B1**
(45) Date of publication and mention of the grant of the patent: **27.03.2019**
(21) Application number: 15846558.3
(22) Date of filing: 28.09.2015
(51) Int. Cl.: H04W 76/14, H04W 72/12, H04W 84/12

(54) **DIRECT LINK SCHEDULING METHOD, ACCESS POINT AND TERMINAL DEVICE**
VERFAHREN ZUR ZEITPLANUNG EINER DIREKTEN VERBINDUNG, ZUGANGSPUNKT UND ENDGERÄTEVORRICHTUNG
PROCÉDÉ DE PROGRAMMATION DE LIAISON DIRECTE, POINT D'ACCÈS ET DISPOSITIF TERMINAL

(30) Priority: 30.09.2014 CN 201410526325
(43) Date of publication of application: 19.07.2017
(73) Proprietor: Huawei Technologies Co., Ltd., Longgang District Shenzhen, Guangdong 518129 (CN)
(72) Inventor: DING, Zhiming, Shenzhen Guangdong 518129 (CN); DU, Zhenguo, Shenzhen Guangdong 518129 (CN)
(74) Representative: Thun, Clemens
(86) International application number: PCT/CN2015/090905
(87) International publication number: WO 2016/050189

(56) References cited:
- CN-A- 102 461 317
- CN-A- 102 883 265
- US-A1- 2011 007 692
- US-A1- 2012 218 981
- US-A1- 2014 023 062
- US-A1- 2014 248 055
- TIAN HUI (BUPT): "Potential Solutions to D2D Assisted WLAN ; 11-13-0631-00-0hew-potential-solutions-to- d2d-assisted-wlan", IEEE SA MENTOR; 11-13-0631-00-0HEW-POTENTIAL-SOLUTIONS-TO- D2D-ASSISTED-WLAN, IEEE-SA MENTOR, PISCATAWAY, NJ USA, vol. 802.11 HEW, 17 May 2013 (2013-05-17), pages 1-12, XP068054179, [retrieved on 2013-05-17]
- YONGHO SEOK (LG ELECTRONICS) ET AL: "fair and protected DLS ; 11-07-2489-01-0dls-fair-and-protected-dls" , IEEE DRAFT; 11-07-2489-01-0DLS-FAIR-AND-PROTECTED-DLS, IEEE-SA MENTOR, PISCATAWAY, NJ USA, vol. 802.11DLS SG, no. 1, 18 September 2007 (2007-09-18), pages 1-19, XP017683050, [retrieved on 2007-09-18]

## Description

### TECHNICAL FIELD

The present invention relates to the field of communications technologies, and in particular, to a direct link scheduling method, an access point and a terminal device.

### BACKGROUND

In a direct communication manner DLS (Direct-Link Setup, direct-link setup) in the WiFi (Wireless Fidelity, Wireless Fidelity) technology standard IEEE 802.11-2012, an initiator STA (Station, referring to a terminal device herein) 1 sends a management message requesting to set up a direct link to an access point (Access Point, AP), the AP forwards the request message to an STA2. After accepting the request, the STA2 may set up a direct-link with the STA1. After the direct link is set up, when the two STAs communicate with each other, a packet may be directly sent to a peer party by using an air interface (English: air interface or wireless interface), but does not need to be forwarded by using the AP. In this way, compared with that when the STA1 sends a piece of data to the STA2 by using the AP, the STA1 first sends the data to the AP and then the AP forwards the data to the STA2, this needs to occupy a channel twice, a direct link enables occupation on channel resources to be reduced when two STAs served by a same AP communicate with each other.

For example, US 2014/0248055A1 refers to a wireless transmit/receive unit (WTRU), comprising a receiver configured to: receive a first message from a central controller, wherein the first message is a channel sounding request that includes a request for capability information; receive a second message from the central controller, wherein the second message is a channel sounding notification; and receive a Terahertz spectrum secure short range communication (SSRC) signal; a transmitter configured to transmit a Terahertz spectrum SSRC signal in response to the channel sounding request including the capability information; and a processor configured to process the received LTV SSRC signals.

In existing standards, a direct link may operate on an operating channel (that is, a basic channel) of an AP, or may operate on a channel (that is, a non-basic channel) different from a basic channel. When a direct link operates on a basic channel, the direct link, when transmitting data, still needs to request a channel resource from an AP, that is, when the direct link transmits data, another STA in a BSS (Basic Service Set, basic service set) controlled by the AP and the AP cannot use the channel resource. When the direct link operates on a non-basic channel, the direct link does not occupy an operating channel of the AP. Therefore, data transmission of another link in the BSS is not affected, but an STA on the direct link may compete with another BSS for a channel resource.

With development of the IEEE802.11 technology, an operating channel of an AP is increasingly wide, while a quantity of channels into which finite wireless spectrums may be divided is increasingly small. In this way, when the AP operates on an extremely wide radio channel, it becomes difficult for an STA to select a non-basic channel as an operating channel of a direct link. Therefore, it still needs to be considered that the direct link operates on a basic channel.

Because a WiFi network (that is, a network running the IEEE802.11 standard) runs in a free wireless spectrum, a contention mechanism is mainly used. For the standard IEEE 802.11ax that is recently being stipulated, in some scenarios in which users are dense, a direct technology is used to improve a system throughput. However, in the existing standards, a direct link is not effectively managed, and instead, an STA on the direct link competes for a channel, which is unfavorable to improvement in radio resource utilization efficiency.

### SUMMARY

Embodiments of the present invention provide a direct link scheduling method, an access point and a terminal device, so as to avoid channel contention between different direct links and reduce a probability that a conflict occurs because of the channel contention.

In a first aspect a direct link scheduling method is provided comprising:
multicasting or broadcasting, by an access point, direct link scheduling information, wherein the direct link scheduling information comprises information about multiple direct links participating in a next direct link scheduled period, and each of the multiple direct links is a link that is set up by two terminal devices associated with the access point and that is used for direct communication;
obtaining, by the access point in the direct link scheduled period, sounding results sent by the both terminal devices on each of the multiple direct links; and separately allocating, by the access point, channel resources to the multiple direct links according to the sounding results in the direct link scheduled period, wherein
the sounding result comprises information about an available sub-channel or an unavailable sub-channel for the terminal device sending the sounding result, and wherein a sub-channel in a channel resource allocated by the access point to the direct link on which the terminal device sending the sounding result is located does not comprise the unavailable sub-channel, or is selected from the available sub-channel; and/or
the sounding result comprises information about an interfering terminal, and the interfering terminal refers to a terminal device that interferes with the terminal device sending the sounding result, and that is on another direct link of the multiple scheduled direct links except the direct link on which the terminal device sending the sounding result is located, and sub-channels or transmission time in channel resources respectively allocated by the access point to the direct link on which the terminal device sending the sounding result is located and the direct link on which the interfering terminal is located are or is different; and
sending, by the access point, information about the allocated channel resource to the both terminal devices on each of the multiple direct links.

In a first implementation form of the first aspect the direct link scheduling information comprises link identifiers of the multiple direct links, or comprises link identifiers of the multiple direct links and a start time of the direct link scheduled period.

In a second implementation form of the first aspect, before the obtaining, by the access point in the direct link scheduled period, sounding results sent by the both terminal devices on each of the multiple direct links, the method further comprises:
instructing, by the access point, the both terminal devices on each of the multiple direct links to sequentially perform a sounding operation.

In a third implementation form of the first aspect the instructing, by the access point, the both terminal devices on each of the multiple direct links to sequentially perform a sounding operation specifically comprises:
sequentially sending, by the access point, a polling frame to the both terminal devices on each of the multiple direct links, wherein the polling frame is used to instruct a terminal device receiving the polling frame to send a sounding frame, and the sounding frame carries information used to uniquely indicate a sender.

In a fourth implementation form of the first aspect the polling frame is a null data packet.

In a fifth implementation form of the first aspect the direct link scheduling information further comprises information about a sounding sequence of the both terminal devices on each of the multiple direct links, and
the instructing, by the access point, the both terminal devices on each of the multiple direct links to sequentially perform the sounding operation specifically comprises:
sending, by the access point, a sounding triggering frame, wherein the sounding triggering frame is used to instruct the both terminal devices on each of the multiple direct links to sequentially send a sounding frame according to the sounding sequence, and the sounding frame carries information used to uniquely indicate a sender.

In a sixth implementation form of the first aspect the multicasting or broadcasting, by the access point, direct link scheduling information specifically comprises:
multicasting or broadcasting, by the access point, a schedule frame, wherein the schedule frame carries the direct link scheduling information; and
the direct link scheduling information further comprises information about a sounding sequence of the both terminal devices on each of the multiple direct links, and
the instructing, by the access point, the both terminal devices on each of the multiple direct links to sequentially perform the sounding operation is specifically:
   the schedule frame is used to instruct the both terminal devices on each of the multiple direct links to sequentially send a sounding frame according to the sounding sequence, and the sounding frame carries information used to uniquely indicate a sender.

In a seventh implementation form of the first aspect the both terminal devices on any one of the multiple direct links comprise a first-party terminal device and a second-party terminal device; and
the obtaining, by the access point, sounding results sent by the both terminal devices on each of the multiple direct links specifically comprises:
separately sending, by the access point, a first query frame and a second query frame, wherein the first query frame is used to instruct the first-party terminal device on the multiple direct links to send, after receiving the first query frame, a sounding result to the access point, and the second query frame is used to instruct the second-party terminal device on the multiple direct links to send, after receiving the second query frame, a sounding result to the access point; or
simultaneously sending, by the access point, query frames to the both terminal devices on each of the multiple direct links, wherein the query frames are used to instruct the both terminal devices on each of the multiple direct links to simultaneously send, after receiving the query frames, sounding results to the access point; or
the direct link scheduling information further comprises information about a reporting sequence of the multiple direct links, and the obtaining, by the access point, sounding results sent by the both terminal devices on each of the multiple direct links specifically comprises:
   sending, by the access point, reporting triggering frames to the both terminal devices on each of the multiple direct links, wherein the reporting triggering frames are used to instruct the both terminal devices on each of the multiple direct links to sequentially send sounding results to the access point according to the information about the reporting sequence.

In an eighth implementation form of the first aspect in a case in which the access point separately sends the first query frame and the second query frame, the method further comprises:
further instructing, by the access point, the both terminal devices on each of the multiple direct links to sequentially send sounding results to the access point by using a same sub-channel, and the both terminal devices on a different direct link to send sounding results to the access point by using a different sub-channel.

In a second aspect a direct link scheduling method is provided comprising:
receiving, by a terminal device, direct link scheduling information from an access point, wherein the direct link scheduling information comprises information about multiple direct links participating in a next direct link scheduled period, and each of the multiple direct links is a link that is set up by two terminal devices associated with the access point and that is used for direct communication;
determining, by the terminal device according to the direct link scheduling information, whether to participate in the direct link scheduled period; and
if yes, performing, by the terminal device, the following steps.
sending, by the terminal device, a sounding result to the access point in the direct link scheduled period;
receiving, by the terminal device, information about the channel resource allocated by the access point to the direct link on which the terminal device is located; and
communicating, by the terminal device by using the channel resource, with a terminal device on the other end of the direct link on which the terminal device is located, wherein
the sounding result comprises information about an available sub-channel or an unavailable sub-channel for the terminal device, and wherein a sub-channel in the channel resource does not comprise the sub-channel unavailable for the terminal device, or is selected from the sub-channel available for the terminal device; and/or
the sounding result comprises information about an interfering terminal, the interfering terminal refers to a terminal device that interferes with the terminal device, and that is on another direct link of the multiple scheduled direct links except the direct link on which the terminal device is located, and sub-channels or transmission time in channel resources respectively allocated to the direct link on which the terminal device is located and the direct link on which the interfering terminal of the terminal device is located are or is different.

In a first implementation form of the second aspect, if yes, the terminal device further performs the following step:
performing, by the terminal device, a sounding operation according to an indication of the access point in the direct link scheduled period.

In a second implementation form of the second aspect the performing, by the terminal device, the sounding operation according to the indication of the access point specifically comprises:
sending, by the terminal device, a sounding frame according to the indication of the access point, and the sounding frame carries information used to uniquely indicate a sender;
sensing, by the terminal device, a sounding frame sent by a another terminal device on the multiple direct links except the terminal device; and
recording, by the terminal device, the sounding result, wherein the sounding result comprises the information about the interfering terminal.

In a third implementation form of the second aspect the both terminal devices on any one of the multiple direct links comprise a first-party terminal device and a second-party terminal device; and
the sending, by the terminal device, the sounding result to the access point specifically comprises:
if the terminal device is a first-party terminal device on the direct link on which the terminal device is located, sending, by the terminal device, the sounding result at the same time when a first-party terminal device on another direct link of the multiple direct links except the direct link on which the terminal device is located sends a sounding result;
if the terminal device is a second-party terminal device on the direct link on which the terminal device is located, sending, by the terminal device, the sounding result at the same time when a second-party terminal device on another direct link of the multiple direct links except the direct link on which the terminal device is located sends a sounding result; or
sending, by the terminal device, the sounding result at the same time when the terminal device on the other end of the direct link on which the terminal device is located sends a sounding result; or
the direct link scheduling information further comprises information about a reporting sequence of the multiple direct links, and
sending, by the terminal device, the sounding result to the access point according to the information about the reporting sequence.

In a third aspect a access point configured and intended to perform any of the methods according to the first aspect or its implementation forms is provided.

In a fourth aspect a terminal device configured and intended to perform any of the methods according to the second aspect or its implementation forms is provided.

It can be seen from the foregoing technical solutions that, the embodiments of the present invention have the following advantages:

In the embodiments of the present invention, an access point allocates channel resources to direct links and a terminal device on each direct link does not need to contend for a channel, which can avoid channel contention between different direct links and reduce a probability that a conflict occurs because of the channel contention, thereby improving channel use efficiency of multiple direct links. Moreover, the access point obtains sounding results sent by both terminal devices on each of the multiple direct links in a next direct link scheduled period, where the sounding result includes information about a sub-channel available or unavailable for the terminal device sending the sounding result, so that sub-channels in channel resources allocated by the access point to the terminal devices according to the sounding results do not include the sub-channels unavailable for the terminal devices, or sub-channels in channel resources allocated to the terminal devices are selected from the sub-channels available for the terminal devices; or the sounding result includes information about an interfering terminal, so that sub-channels or transmission time in channel resources allocated by the access point to the terminal devices and the interfering terminal of the terminal devices according to the sounding results are or is different. In this way, the direct links can be prevented from operating on a channel interfering with the direct links, or the direct links can be prevented from interfering with each other during data transmission, thereby improving channel utilization efficiency.

### BRIEF DESCRIPTION OF DRAWINGS

FIG. 1 is a flowchart of an embodiment of a direct link scheduling method according to the present invention;
FIG. 2 is a flowchart of another embodiment of a direct link scheduling method according to the present invention;
FIG. 3 is a flowchart of another embodiment of a direct link scheduling method according to the present invention;
FIG. 4 is a flowchart of another embodiment of a direct link scheduling method according to the present invention;
FIG. 5 is a flowchart of an embodiment of a direct link scheduling method according to the present invention;
FIG. 6 is a flowchart of another embodiment of a direct link scheduling method according to the present invention;
FIG. 7 shows a format of list elements in an LSP;
FIG. 8 is a schematic structural diagram of an NDP polling frame;
FIG. 9 is a schematic structural diagram of an NDP query frame;
FIG. 10 is a schematic structural diagram of a format of a reporting frame;
FIG. 11 is a schematic diagram of an embodiment of a sounding period;
FIG. 12 is a schematic diagram of another embodiment of a sounding period;
FIG. 13 is a schematic diagram of an embodiment of a reporting period;
FIG. 14 is a schematic structural diagram of an embodiment of an access point according to the present invention;
FIG. 15 is a schematic structural diagram of another embodiment of an access point according to the present invention;
FIG. 16 is a schematic structural diagram of an embodiment of a terminal device according to the present invention;
FIG. 17 is a schematic structural diagram of another embodiment of an access point according to the present invention; and
FIG. 18 is a schematic structural diagram of a terminal device and an access point according to the present invention.

### DESCRIPTION OF EMBODIMENTS

Embodiments of the present invention provide a direct link scheduling method, so as to avoid channel contention between different direct links and reduce a probability that a conflict occurs because of the channel contention, thereby improving channel use efficiency of multiple direct links, and further enable some direct links to communicate by using a same channel resource, thereby further improving channel use efficiency.

To make a person skilled in the art understand the technical solutions in the present invention better, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The terms "include", "contain" and any other variants in the specification, claims, and the accompanying drawings of the present invention mean to cover the non-exclusive inclusion, for example, a process, method, system, product, or device that includes a list of steps or units is not necessarily limited to those units, but may include other units not expressly listed or inherent to such a process, method, system, product, or device.

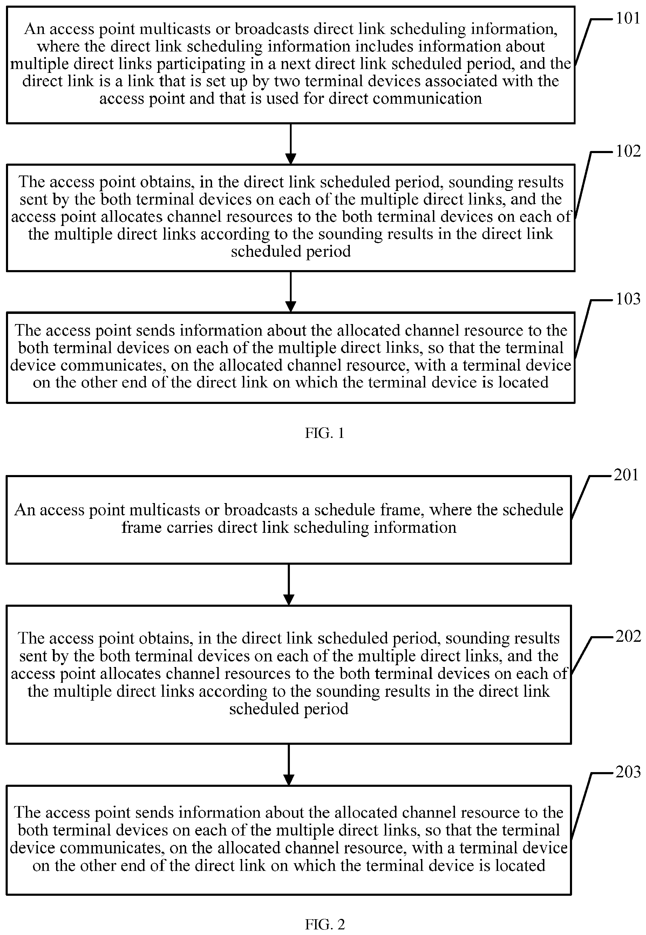

Referring to FIG. 1, a direct link scheduling method in an embodiment of the present invention includes the following steps.

101: An access point multicasts or broadcasts direct link scheduling information, where the direct link scheduling information includes information about multiple direct links participating in a next direct link scheduled period, and the direct link is a link that is set up by two terminal devices associated with the access point and that is used for direct communication.

During setup of a direct link, a terminal device of a direct-link setup initiator (briefly referred to as an initiating party below) sends a request message requesting to set up a direct link to an AP, the AP forwards the request message to a terminal device of a direct-link setup acceptor (briefly referred to as an accepting party below), and after accepting the request, the accepting party may set up a direct link with the initiating party. Therefore, the AP is clear about all direct links that are set up by terminal devices associated with the AP, that is, all direct links in a BSS controlled by the AP. For convenience of management, the AP may allocate a link identifier (Link Identifier, LID) to each direct link. Each LID is used to uniquely identify the direct link, which is certainly unnecessary.

In this embodiment, before data transmission, direct links do not contend for respective channel resources of the AP, and instead, the AP actively schedules a direct link. That is, the AP provides a transmission opportunity to a terminal device on the direct link according to a need of the direct link on a proper occasion, and allocates a channel resource to the direct link. The direct link scheduled period (Link Scheduled Period, LSP) is a period needed by scheduling performed by the AP on a batch of direct links once. In each LSP, the AP may schedule all controlled direct links, or may schedule only some direct links of all the direct links.

Therefore, before each LSP begins, the AP multicasts or broadcasts direct link scheduling information. The direct link scheduling information includes information about multiple direct links participating in a next direct link scheduled period, so as to indicate that the multiple direct links participate in the next LSP. Specifically, the information about the multiple direct links included in the direct link scheduling information may be link identifiers of the direct links, or may be addresses of both communications terminal devices on the direct links, or may be another information that can uniquely identify the direct links, which is not limited herein. However, use of an identifier of a direct link makes the scheduled information relatively concise.

For convenience of description, a link set formed by multiple direct links participating in a next LSP is referred to as a scheduled link set below. Terminal devices on all direct links in the scheduled link set are referred to as terminal devices in the scheduled link set, and both terminal devices on a direct link are further respectively referred to as a first-party terminal device and a second-party terminal device. The first-party terminal device on the direct link is an initiating party of the direct link, and the second-party terminal device is an accepting party of the direct link. Alternatively, the first-party terminal device is a terminal device whose address is relatively small in the direct link, and the second-party terminal device is a terminal device whose address is relatively large in the direct link, and how to define the first-party terminal device and the second-party terminal device is not limited herein.

Two direct links that have at least one same terminal device cannot transmit data at the same time. Therefore, preferably, terminal devices on any two direct links of the scheduled link set do not include a same terminal device, so that the AP can arrange any two direct links in the scheduled link set to transmit data at the same time.

102: The access point obtains, in the direct link scheduled period, sounding results sent by the both terminal devices on each of the multiple direct links, and the access point separately allocates channel resources to the multiple direct links according to the sounding results in the direct link scheduled period.

During data transmission, an initiating party of a direct link needs a channel resource to transmit data to an accepting party of the direct link, and the accepting party needs a channel resource to send an acknowledgement message to the initiating party, and therefore the access point needs to send, to both terminal devices, channel resources allocated to the direct link on which the initiating party and the accepting party are located. Optionally, the access point may separately send, to the both terminal devices by sending two messages, the channel resources allocated to the direct link, or the access point may broadcast only one message, where the message includes the channel resources allocated to the direct link, so that the both terminal devices on the direct link can receive the message, and then can learn the channel resources allocated to the direct link.

In an LSP, sounding results obtained by the access point may be sounding results obtained by terminal devices in the scheduled link set that perform a sounding after the LSP begins, where the sounding refers to that each terminal device sequentially sends a message used to perform a test, so that another terminal device in the scheduled link set determines whether the message that is used to perform a test and that is sent from the terminal device can be detected. If a terminal device A can sense a message that is used to perform a test and that is sent by a terminal device B, and the terminal device A and the terminal device B are separately located on different direct links in the scheduled link set, a direct link on which the terminal device A is located and a direct link on which the terminal device B is located interfere with each other.

During a sounding, unit link power used when each terminal device sends a test message is the same as unit link power used during subsequent data transmission, so as to test whether direct links at the unit link power interfere with each other, so that the access point may allocate a same channel resource to direct links that do not interfere with each other. In this way, the access point may properly allocate as many as possible channel resources to the direct links in the scheduled link set, thereby improving channel use efficiency.

Because of relative-location stationarity or low-speed motility of an STA in a WiFi network, a location of a terminal device basically does not change in a time, and therefore the sounding results may also be sounding results obtained by performing a sounding at any moment before the LSP, which is not limited herein. Sounding results sent by terminal devices in the scheduled link set may be sounding results of the terminal devices on an operating channel of the AP, or may be sounding results on a non-operating channel of the AP, which is not limited herein.

When obtaining sounding results, the AP may sequentially query terminal devices in the scheduled link set for the sounding results, or it may be preset that terminal devices in the scheduled link set send sounding results to the access point in the LSP according to a prescribed time and sub-channels, which is not limited herein.

In this embodiment, the channel resources may include a spectrum resource and a time resource. After obtaining a scheduled link set, the AP may arrange all direct links in the scheduled link set to perform data transmission in a same period of time, or direct links in the scheduled link set may be divided into at least two batches of direct links, where a same batch of direct links transmit data in a same period of time, and different batches of direct links transmit data in different periods of time.

Direct links in the scheduled link set may perform transmission on different sub-channels at the same time. However, in consideration of unequal amounts of data to be transmitted on direct links, to more effectively use channel resources, it may be not that each direct link equally uses a sub-channel (that is, a spectrum resource), but it may be that this direct link uses two or more sub-channels, while another direct link uses only one sub-channel. It may be further that multiple direct links perform time division transmission on a same sub-channel resource.

In an actual application, a case in which if some direct links use a same spectrum resource to transmit data at the same time, the direct links interfere with each other may occur in the scheduled link set determined by the AP. Therefore, before allocating a channel resource to the scheduled link set, the AP needs to obtain sounding results of terminal devices on direct links in the scheduled set. A sounding result of each terminal device may include information about an interfering terminal, the interfering terminal refers to another terminal device that interferes with the terminal device sending the sounding result, and the another terminal device is a terminal device in the scheduled link set on another direct link except a direct link on which the terminal device sending the sounding result is located. In this way, sub-channels or transmission time in the channel resources that the AP can allocate, during subsequent channel resource arrangement according to the sounding results, to a direct link on which the terminal device sending the sounding result is located and the direct link on which the interfering terminal is located are or is different, so as to avoid a case in which the direct links interfere with each other. Moreover, a same spectrum resource and a same time resource may be allocated, that is, a same sub-channel resource and a same period of time are allocated to direct links on which terminal devices not interfering with each other are separately located.

Specifically, information about an interfering terminal in a sounding result of each terminal device may be a list of addresses of interfering terminals, or link identifier plus link role information, where the link role information is used to indicate a (for example, first-party or second-party) terminal device in a direct link on which the interfering terminal is located that the interfering terminal is. If the terminal device can sense a signal from a terminal device on another direct link in the scheduled link set, detected indication information (for example, an address, or link identifier + link role information) of the terminal device may be added to the information about an interfering terminal.

Alternatively, in the scheduled link set determined by the AP, it may further occur that some sub-channels interfere with some direct links, that is, when these direct links transmit data on some sub-channels, there is a noise or an interfering signal. Therefore, a sounding result of each terminal device may include sub-channels available or unavailable for the terminal device. In this way, when the AP allocates a channel resource, sub-channels in the channel resource allocated to the terminal device sending the sounding result do not include the sub-channels unavailable for the terminal device, or sub-channels in the channel resource allocated to the terminal device sending the sounding result are selected from the sub-channels available for the terminal device.

Generally, for direct links in a scheduled link set, channel resources allocated by the AP to both terminal devices located on a same direct link are the same. For convenience of description, a channel resource allocated to the terminal device is also referred herein to as a channel resource allocated to a direct link on which the terminal device is located, or a channel resource allocated to the direct link, where the direct link refers to a direct link on which the terminal device is located.

Specifically, for example, in a type of simple channel resource scheduling, direct links are respectively allocated to different sub-channels. A sounding result of each terminal device includes the sub-channels unavailable for the terminal device. In this way, a channel resource that can be allocated by the AP to each direct link during subsequent channel resource arrangement does not include the sub-channels unavailable for the terminal device. Certainly, in an actual application, in a case except that the AP arranges different sub-channels for direct links, in another channel resource scheduling method, the AP may not allocate a sub-channel interfering with a direct link to the direct link according to the sounding result.

103: The access point sends information about the allocated channel resource to the both terminal devices on each of the multiple direct links, so that the both terminal devices on each of the multiple direct links separately communicate with a peer party by using a channel resource allocated by the access point to the terminal devices.

After determining a channel resource allocated to each terminal device in the scheduled link set, the access point sends the channel resource allocated to each terminal device to the terminal device. In an actual application, some terminal devices in the scheduled link set may be located on multiple different direct links. When receiving channel resources, both terminal devices on each direct link in the scheduled link set separately communicate, by using the channel resources allocated by the access point to the terminal devices, with a terminal device on the other end of a scheduled direct link on which the terminal devices are located (that is, a direct link in the scheduled link set).

Preferably, the access point may send information about channel resources on all channels, so as to reduce a time that is needed to send the information about the channel resources, and improve channel efficiency.

In this embodiment of the present invention, an access point allocates channel resources to direct links and a terminal device on each direct link does not need to contend for a channel, which can avoid channel contention between different direct links and reduce a probability that a conflict occurs because of the channel contention, thereby improving channel use efficiency of multiple direct links. Moreover, the access point obtains sounding results sent by both terminal devices on each of the multiple direct links in a next direct link scheduled period, where the sounding result includes information about a sub-channel available or unavailable for the terminal device sending the sounding result, so that sub-channels in channel resources allocated by the access point to the terminal devices according to the sounding results do not include the sub-channels unavailable for the terminal devices, or sub-channels in channel resources allocated to the terminal devices are selected from the sub-channels available for the terminal devices; or the sounding result includes information about an interfering terminal, so that sub-channels or transmission time in channel resources allocated by the access point to the terminal devices and the interfering terminal of the terminal devices according to the sounding results are or is different. In this way, the direct links can be prevented from operating on a channel interfering with the direct links, or the direct links can be prevented from interfering with each other during data transmission, thereby improving channel utilization efficiency.

It should be noted that, in the present invention, the multiple direct links that participate in the next direct link scheduled period and that are included in the direct link scheduling information that is multicast or broadcast by the access point, that is, all the direct links in "the scheduled link set" described herein, are unnecessarily all the direct links included in the direct link scheduling information that is multicast or broadcast by the access point, and may be some direct links of all the direct links. That is, the access point multicasts or broadcasts the direct link scheduling information, so as to instruct a batch of direct links to participate in the next direct link scheduled period, but actually only some direct links of this batch of direct links may really participate in the next direct link scheduled period. Certainly, this batch of direct links may all actually participate in the next direct link scheduled period.

Preferably, the direct link scheduling information may include a start time of the next direct link scheduled period. Specifically, when the access point multicasts or broadcasts the direct link scheduling information, it may indicate that an LSP immediately begins, or a piece of time information indicating a start time of an LSP may be included in the direct link scheduling information. That is, an LSP may begin when the direct link scheduling information is sent, or may begin from a time point indicated in the direct link scheduling information.

Preferably, in this embodiment, the access point further obtains transport stream information of the direct links in the scheduled link set. The transport stream information may include identifier information of a terminal device to which a transport stream belongs (for example, a MAC (media access control, Media Access Control) address of the terminal device or an association identifier allocated by the AP to the terminal device), a transport stream identifier, a transmission direction (that is, sent by which terminal device to which terminal device), a transmission parameter and the like, where the transmission stream identifier is included in a frame header of a data frame, and is used to uniquely identify the transport stream in the terminal device to which the transport stream belongs; and the transmission parameter is used to describe a data transmission characteristic, for example, a service period interval (that is, a time interval between two time of neighboring data transmission) or a data rate (that is, an amount of data transmitted per second).

The AP obtains a resource requirement of a direct link according to transport stream information of the direct link, or determines, with reference to a historical transmission situation and transport stream information of the direct link, how much data should need to be transmitted by the direct link at this time, thereby determining a resource requirement of the direct link. In this way, when the AP allocates resources to direct links, the AP can conveniently schedule the direct links in a planned manner according to transport stream information of the direct links and according to requirements.

Certainly, in an actual application, the access point may not obtain transport stream information, and instead, a terminal device sends a resource request message to the AP during an LSP, to indicate how much data is to be sent. Then, the AP allocates the channel resource to the terminal device according to an amount of data that the terminal device needs to send.

In a case in which the access point further obtains transport stream information of direct links, when allocating LIDs to the direct links, the access point may further allocate an LID to each transport stream, and the AP may perform channel resource allocation for each transport stream on the direct links. In this way, each direct link has multiple LIDs.

Alternatively, it may be specified that each terminal device reports, to the AP, total transport stream information aggregated on a direct link on which each terminal device is located, or the AP aggregates each transport stream information reported by each terminal device. Then, the AP allocates an LID to each direct link, and then, when allocating a channel resource to the direct link, the AP only ensures that a total transmission requirement of the direct link is satisfied regardless of a situation of each transport stream in the direct link.

In the foregoing embodiment, the access point multicasts or broadcasts direct link scheduling information, so as to indicate a direct link participating in a next LSP. In an actual application, the access point multicasts or broadcasts the direct link scheduling information in multiple manners, and specifically, the access point may multicast or broadcast the direct link scheduling information by using a method for multicasting or broadcasting a schedule frame. A direct link scheduling method in an embodiment of the present invention is described below. Referring to FIG. 2, a direct link scheduling method in another embodiment of the present invention includes the following steps.

201: An access point multicasts or broadcasts a schedule frame, where the schedule frame carries direct link scheduling information.

In this embodiment, the AP may indicate a start time of an LSP by multicasting or broadcasting a schedule frame (Schedule frame). Specifically, the schedule frame may be directly used to indicate that an LSP immediately begins, or a piece of time information may be included in the schedule frame to indicate a start time of an LSP. That is, an LSP may begin from the schedule frame, or may begin from a time point indicated in the schedule frame. Alternatively, the schedule frame may be another periodic broadcast frame (for example, a beacon frame Beacon frame), and the AP indicates a start time of each LSP by using information that is included in the another periodic broadcast frame and that is the same as that in an LSP schedule frame. For convenience of the following description, the schedule frame used to indicate that an LSP immediately starts is referred to as the LSP schedule frame, so as to distinguish from another periodic broadcast frame.

In this embodiment, the direct link scheduling information carried in the schedule frame that is multicast or broadcast by the AP includes link identifiers used to separately uniquely identify direct links in the scheduled link set, so that terminals on the direct links may determine, according to the scheduled link set, whether to participate in this LSP. Specifically, the schedule frame carries an LID list, and LIDs of the direct links in the scheduled link set are arranged in the LID list. Certainly, the foregoing is only exemplified, but does not limit the direct link scheduling information carried in the schedule frame.

202: The access point obtains, in the direct link scheduled period, sounding results sent by the both terminal devices on each of the multiple direct links, and the access point separately allocates channel resources to the multiple direct links according to the sounding results in the direct link scheduled period.

For a detailed description, refer to the description of step 102 in the embodiment shown in FIG. 1.

203: The access point sends information about the allocated channel resource to the both terminal devices on each of the multiple direct links, so that the both terminal devices on each of the multiple direct links separately communicate with a peer party by using a channel resource allocated by the access point to the terminal devices.

For a detailed description, refer to the description of step 103 in the embodiment shown in FIG. 1.

In this embodiment, the schedule frame is used to indicate a start time of an LSP and a direct link participating in the LSP, which enables direct links to quickly determine whether to participate in a next LSP and a start time of the LSP, and helps the AP allocate resources to the direct links.

In this embodiment, in step 201, the AP may broadcast the LSP schedule frame to indicate that an LSP begins on a direct link in the scheduled link set. Specifically, the LSP schedule frame may be defined as an action management frame (Action management frame) defined in an IEEE 802.11 standard, and an Action field in the frame is used to indicate that this action management frame is an LSP schedule frame. The action management frame is a sub-type of management frames, and has a uniform format. For detailed content, refer to the text of the IEEE 802.11 standard, and details are not described herein.

In all the management frames except some public fixed fields (for example, the Action field), an information element (information element) is used to carry various parameters related to the management frames. The information element is a data structure, and fixedly includes an element identifier EID (Element Identifier), and a length field, and a parameter part specific to the element is following. The EID indicates which type of element the element is, and the EID determines which parameters are included in the element. The length field indicates a quantity of bytes occupied by the parameter part in the element.

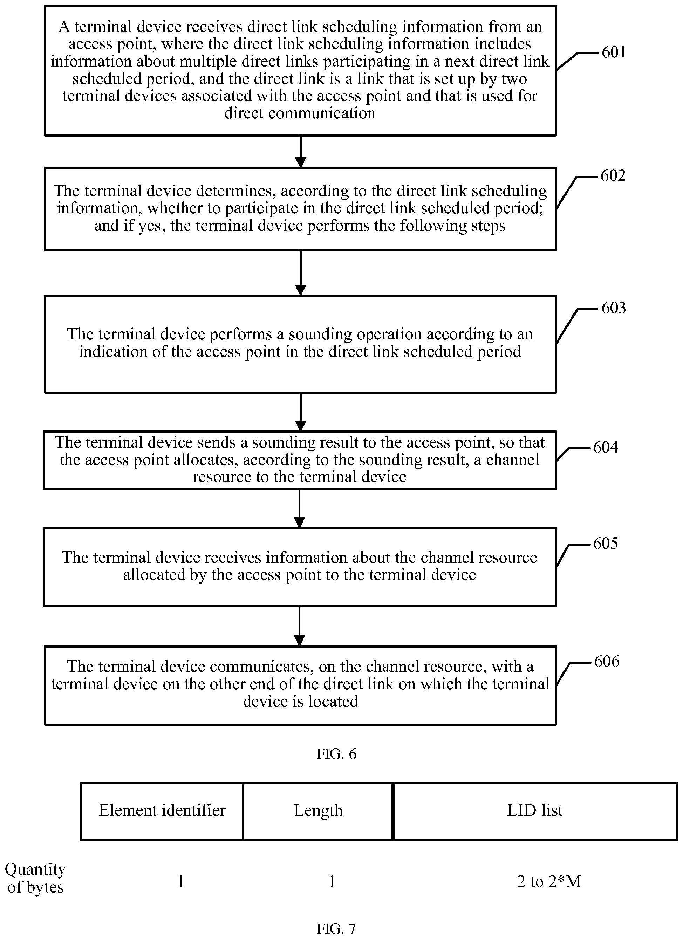

In this embodiment, the LSP schedule frame carries the LID list of the direct links in the scheduled link set to indicate the scheduled link set participating in the LSP. Specifically, in a case in which the LSP schedule frame is an action management frame, the LSP schedule frame may use an LID list element to carry the LID list. Referring to FIG. 7, FIG. 7 shows a format of list elements in an LSP. The list elements include three parameters: an EID, a length and an LID list. The LID list may include LID values of one to N direct links of a scheduled link set, for example, LID-1, LID-2, ..., and LID-N, and each LID value occupies two bytes. It may be specified that the scheduled link set includes N direct links at most, where N is a value related to a quantity N_{ch} of sub-channels included in an operating channel of the AP. For example, N is equal to N_{ch}, 1.5N_{ch} or 2N_{ch}.

Preferably, the quantity of the direct links in the scheduled link set is equal to the quantity of the sub-channels included in the operating channel of the AP, that is, N is equal to N_{ch}. In this way, an effect obtained by integrating a success rate at which the AP schedules the direct links in the scheduled link set and overheads that are generated because of scheduling is best.

Preferably, the LSP schedule frame may further include a piece of time information, which is used to indicate that an LSP begins from a time indicated by the time information, and indicate that a terminal device on a direct link out of the scheduled link set may keep dormant at least in a period of time indicated by the time information, so as to save power.

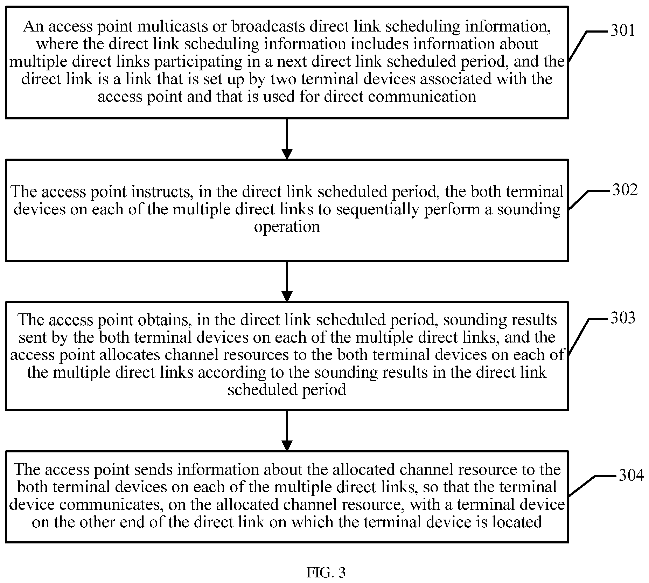

In the foregoing embodiment, the access point obtains the sounding results sent by the terminal devices on the multiple direct links. The sounding results may be sounding results obtained by terminal devices in the scheduled link set that perform a sounding after the LSP begins. How an AP obtains a sounding result in an embodiment of the present invention is described below. Referring to FIG. 3, a direct link scheduling method in another embodiment of the present invention includes the following steps.

301: An access point multicasts or broadcasts direct link scheduling information, where the direct link scheduling information includes information about multiple direct links participating in a next direct link scheduled period, and the direct link is a link that is set up by two terminal devices associated with the access point and that is used for direct communication.

For a detailed description, refer to the description of step 101 in the embodiment shown in FIG. 1 and the description of step 201 in the embodiment shown in FIG. 2.

302: The access point instructs, in the direct link scheduled period, the both terminal devices on each of the multiple direct links to sequentially perform a sounding operation.

In this embodiment, after the LSP starts, the AP instructs terminal devices on direct links in the scheduled link set to undergo a sounding period. In the sounding period, the terminal devices in the scheduled link set sequentially send a sounding frame, where the sounding frame carries information used to uniquely indicate a terminal device sending the sounding frame. When one of users sends a sounding frame, all other terminal devices in the scheduled link set sense the sounding frame. If all the other terminal devices can sense the sounding frame, a sounding result records information indicating the terminal device sending the sounding frame.

In this way, when a sounding result of any terminal device records that a sounding frame from any terminal device on another direct link in the scheduled link set except the direct link on which the terminal device is located is detected, the terminal device that the sounding frame is from is an interfering terminal of the terminal device sensing the sounding frame.

However, each terminal device does not specifically know when to begin to send a sounding frame, but sends a sounding frame according to an indication of the AP. Specifically, for example, after an LSP begins (for example, after one SIFS away from a time when the AP sends an LSP schedule frame, or at a time point at which an LSP indicated in an LSP schedule frame begins), the AP sends a polling frame to one of the terminal devices in the scheduled link set, where the polling frame is used to instruct the terminal device receiving the polling frame to send a sounding frame, so that another terminal device in the scheduled link set except the terminal device sending the sounding frame senses the sounding frame. Certainly, the polling frame may also be replaced with another frame that can instruct a terminal device to send a sounding frame, which is not limited to a polling frame.

The AP knows a time needed by each sounding frame, and time at which a sounding frame and a neighboring polling frame are sent are spaced by an SIFS (Short Inter Frame Space, short interframe space). Therefore, even if the AP may not sense the sounding frame, it may be determined that after sending a polling frame, the AP can send a next polling frame only after one SIFS + time of one sounding frame + one SIFS, that is, a preset time is a sum of two short interframe spaces (SIFS) and the time of one sounding frame.

In this way, the AP sequentially sends a polling frame to the both terminal devices on the direct links in the scheduled link set. Specifically, the AP may first sequentially send a polling frame to first-party terminal devices on the direct links in the scheduled set, and then sequentially send a polling frame to second-party terminal devices on the direct links in the scheduled set; or may sequentially send a polling frame to the direct links in the scheduled set, where when sending a polling frame to each direct link, the AP first sends a polling frame to a first-party terminal device on the direct link, and then sends a polling frame to a second-party terminal device on the direct link. Certainly, the foregoing sending sequence is only exemplified, but not used as a limitation.

In an actual application, a sequence in which the AP sends a polling frame to terminal devices may be an arrangement sequence of LIDs in an LID list in the LSP schedule frame, or may be another sequence, which is not limited herein.

In an actual application, the AP may specify that a polling frame and a sounding frame are sent on all channels of the AP, and terminal devices sense the polling frame and the sounding frame on all the channels. Alternatively, the AP may specify that a polling frame and a sounding frame are sent on a channel of the AP, and terminal devices sense the polling frame and the sounding frame on the channel or all channels. Alternatively, the AP may specify that the AP sends a polling frame on all channels, a terminal device senses the polling frame on all the channels, and the terminal device sends and senses a sounding frame on a designated sub-channel.

Preferably, the AP specifies that both a polling frame and a sounding frame are sent and detected on all channels, which may prevent a terminal device out of the scheduled link set from occupying, in a sounding period, a channel resource on which the AP operates. There are two manners of sending a frame on all channels. For one manner, a frame is sent by using all channels as a wide channel, content of the frame is distributed on all the channels, and a time needed to send a frame completely is relatively short. For the other manner, content of a frame is replicated on each sub-channel, that is, each sub-channel sends the content of the same frame. Alternatively, the two manners may be combined, some content such as a physical header part is replicated on each sub-channel and sent, and other content is distributed on all channels and sent, which is not limited herein. Preferably, sub-channels are selected to perform replication and sending, which may be compatible with a conventional WiFi device, and also helps a scheduled STA, in a case of finding that interference exists in some sub-channels, correctly receive content of a frame on some other sub-channels.

Alternatively, in this embodiment, the AP may not sequentially send a polling frame to terminal devices in the scheduled link set to instruct the terminal devices to perform a sounding, but instruct the terminal devices to perform a sounding by using information that is about a sounding sequence of the both terminal devices on each of the multiple direct links and that is included in the direct link scheduling information, which is specifically explained below.

In step 301, the direct link scheduling information that is multicast or broadcast by the AP further includes an arrangement sequence of the direct links in the scheduled link set, and the arrangement sequence is further used to indicate the sounding sequence of the both terminal devices on the direct links.

Specifically, for example, the AP multicasts or broadcasts a schedule frame including an LID list. The instructing, by the access point, the both terminal devices on each of the multiple direct links to sequentially perform a sounding operation specifically includes: sending, by the access point, a sounding triggering frame, where the sounding triggering frame is used to instruct the both terminal devices on each of the multiple direct links to sequentially send a sounding frame according to the sounding sequence, so that another terminal device on the multiple direct links except the terminal device sending the sounding frame records whether the sounding frame is detected, and the sounding frame carries information used to uniquely indicate a sender.

Specifically, the AP may specify that after first-party terminal devices on all the direct links sequentially send a sounding frame, second-party terminal devices on the direct links then sequentially send a sounding frame, or may specify that after a first-party terminal device and a second-party terminal device on a direct link sequentially send a sounding frame, a first-party terminal device and a second-party terminal device on a next direct link then send a sounding frame. In this way, because the AP does not send a polling frame, and the time of the sounding period is shorter, channel efficiency is higher.

Preferably, in a case in which the AP multicasts or broadcasts a schedule frame, the schedule frame may further serve as the foregoing sounding triggering frame, where the schedule frame includes a start time of the direct link scheduled period and an arrangement sequence of the direct links in the scheduled link set. When receiving the schedule frame, user terminals in the scheduled link set sequentially perform a sounding on an operating channel of the access point according to the arrangement sequence at the start time.

In a case in which the AP does not send a polling frame, because the AP does not send a frame after the LSP starts until the sounding period ends, a time for which the AP does not send a frame is relatively long. Therefore, preferably, a relatively long TXOP (Transmission Opportunity, transmission opportunity) guard period is set in the schedule frame, so as to ensure that the operating channel of the AP is not occupied by a terminal device out of the scheduled link set. If the sounding period does not begin immediately after the LSP schedule frame, but begins at a time point indicated in the LSP schedule frame, the AP may first send a triggering frame at the time point indicated in the LSP schedule frame, and a relatively long TXOP guard period is set in this triggering frame.

In an actual application, two terminal devices on a direct link both use appropriate power to send a message to a peer party, and the power is transmit power used to enable receive power measured by a terminal device of a data receiving party when receiving a frame from a terminal device of a data sending party to be greater than a first value and less than a second value, for example, is minimum power needed by the direct link in normal communication or a specified fixed value. For convenience of description, the power is referred to as link power. Preferably, the AP further instructs the both terminal devices on the direct links in the scheduled link set to send the sounding frame by using link power of the direct link on which the terminal device is located.

303: The access point obtains, in the direct link scheduled period, sounding results sent by the both terminal devices on each of the multiple direct links, and the access point separately allocates channel resources to the multiple direct links according to the sounding results in the direct link scheduled period.

For a detailed description, refer to the description of step 102 in the embodiment shown in FIG. 1.

304: The access point sends information about the allocated channel resource to the both terminal devices on each of the multiple direct links, so that the both terminal devices on each of the multiple direct links separately communicate with a peer party by using a channel resource allocated by the access point to the terminal devices.

For a detailed description, refer to the description of step 103 in the embodiment shown in FIG. 1.

In this embodiment, the AP instructs, in the LSP, the terminal devices in the scheduled link set to perform a sounding, and then obtains sounding results of the terminal devices. In this way, the AP may allocate channel resources according to recently obtained sounding results, and the channel resources allocated to the direct links can better conform to an actual situation of the direct links.

Preferably, in this embodiment, a polling frame is set to an NDP (Null Data Packet, null data packet) frame, which enables the sounding period to occupy an as short as possible time, thereby improving efficiency.

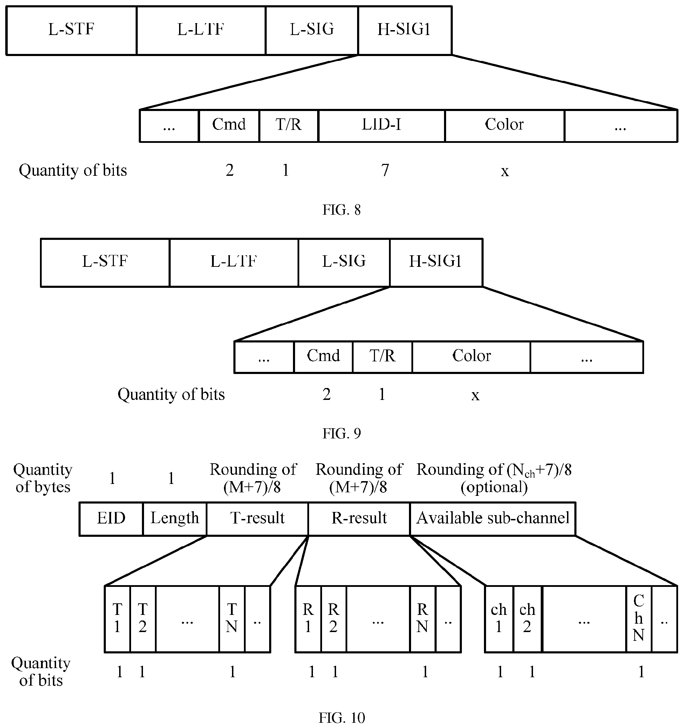

As shown in FIG. 8, FIG. 8 is a schematic structural diagram of an NDP polling frame. The NDP polling frame includes L-STF, L-LTF, L-SIG and H-SIG1, where L-STF, L-LTF, and L-SIG are parts reserved to be compatible with a conventional WiFi device, and L-STF and L-LTF are used for training of an accepting party in a receiving process, so as to identify beginning of a physical data unit, which is indispensable. L-SIG includes some pieces of indication information, this part is dispensable for the present invention, but a new WiFi standard needs to be compatible with the conventional WiFi device.

H-SIG1 is a part used in the new WiFi standard, and the part includes indication information of a quantity of bits. In the present invention, some bits may be used in H-SIG1 to achieve the following objectives:

Cmd: it occupies 2 bits, to indicate a type of the NDP frame. For example, "00" indicates that this is an NDP polling frame.

T/R: it occupies 1 bit, and for a value meaning, it may be defined that a value being "0" indicates an initiating party of a direct link, and a value being "1" indicates an accepting party of the direct link. With reference to a value of Cmd, what is indicated here is whether the NDP polling frame is to query the initiating party of or the accepting party of the direct link.

LID-I: it occupies seven or less bits, and is used to indicate a scheduled direct link, a value may be a location of a corresponding LID in an LID list in an LSP schedule frame, and counting begins from 0. A quantity of bits that the field specifically needs is related to a maximum quantity M (M is greater than or equal to N) of LIDs that may be included in the LSP schedule frame. For example, if M is 8, LID-I needs only three bits, and a value of LID-I ranges from 0 to 7. Use of this indication manner cannot directly indicate the value of LID, and even further cannot indicate a MAC address of a terminal device sending this frame, but a quantity of used bits is extremely small (LID may need 8 to 16 bits, and a MAC address needs 48 bits), and the polling frame may be made extremely short. Certainly, if H-SIG1 may include sufficiently much bit information, or the new WiFi standard specifies that a physical header needs to further have another part such as H-SIG2 or even H-SIG3 after H-SIG1, there may be more available bits. Therefore, the NDP polling frame may include an LID, or even a MAC address of a terminal device, so that information about a polled terminal device may be expressed more directly.

In an actual application, if the LSP schedule frame indicates that the scheduled link set includes all target direct links, LID-I may need many bits to indicate an identifier of a polled direct link. In this case, another value of Cmd may be used to indicate that this is another polling frame, where LID-I occupies more bits.

In the polling frame, LID-I plus T/R indicates a terminal device that is polled, this is, information about the polled terminal device. For example, a first LID in the LID list in the LSP schedule frame is LID-1, and is a direct link from a terminal device 1 to a terminal device 2. When the AP polls the terminal device 1, T/R is set to "0", and a value of LID-I is 0, and when the AP polls the terminal device 2, T/R is set to "1", and a value of LID-I is 0. Moreover, a second LID in the LID list in the LSP schedule frame is LID-2, and is a direct link from a terminal device 3 to a terminal device 4. When the AP polls the terminal device 3, T/R is set to "0", and a value of LID-I is 1, and when the AP polls the terminal device 4, T/R is set to "1", and a value of LID-I is 1.

Color: the NDP polling frame has no MAC part, and therefore can include an extremely small information amount. In order that a terminal device receiving this frame identifies whether a terminal device sending this frame and the terminal device receiving this frame belong to a same BSS, this field is set and this field obtains a Hash value of BSSID. BSSID is actually a MAC address of the AP, and Color values corresponding to BSSID that are recorded in the AP and a terminal device in a same BSS are definitely the same, and a probability that a same Color value is obtained after different BSSID Hash is related to a quantity of bits occupied by the Color field. When the quantity of bits occupied by Color is more, a probability that Color values of different BSSID are the same is less. The quantity of bits that are specifically occupied by the Color field is not limited in the present invention, and is related to a quantity of available bits in the actual physical header. The value of the Color field in the polling frame actually indicates an AP that sends the frame.

Meanings of all bits in H-SIG1 are not described in the present invention. Because complete design of H-SIG1 is not content that the present invention pays attention to, the present invention only requires that the physical header includes information needed by the present invention, and specific locations of these pieces of information are not important.

In this embodiment, an NDP polling frame is designed according to a format in FIG. 8, so that the polling frame can be shortest, which helps improve channel efficiency.

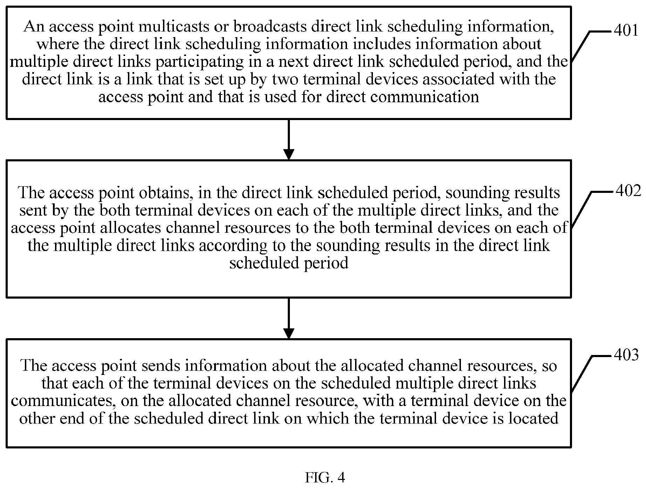

In the foregoing embodiment, the access point obtains the sounding results, on the operating channel of the access point, of the terminal devices on the multiple direct links. In an actual application, the access point may obtain sounding results by using multiple methods. A direct link scheduling method in an embodiment of the present invention is described below. Referring to FIG. 4, a direct link scheduling method in another embodiment of the present invention includes the following steps.

401: An access point multicasts or broadcasts direct link scheduling information, where the direct link scheduling information includes information about multiple direct links participating in a next direct link scheduled period, and the direct link is a link that is set up by two terminal devices associated with the access point and that is used for direct communication.

For a detailed description, refer to the description of step 101 in the embodiment shown in FIG. 1 and the description of step 201 in the embodiment shown in FIG. 2.

402: The access point obtains, in the direct link scheduled period, sounding results sent by the both terminal devices on each of the multiple direct links, and the access point separately allocates channel resources to the multiple direct links according to the sounding results in the direct link scheduled period.

In this embodiment, the AP obtains sounding results by using multiple methods. For purpose of clear description, a "query frame" described in this embodiment is used to instruct a terminal device receiving the query frame to send a sounding result. Certainly, the query frame may also be replaced with another frame that can instruct a terminal device to send a sounding result, which is not limited to a query frame.

For example, the AP separately sends a first query frame and a second query frame. The first query frame is used to instruct first-party terminals on direct links in the scheduled link set to send, after receiving the first query frame, sounding results to the AP, so that the AP can simultaneously receive the sounding results sent by the first-party terminals. The second query frame is used to instruct second-party terminals on the multiple direct links to send, after receiving the second query frame, sounding results to the AP, so that the AP can simultaneously receive the sounding results sent by the second-party terminals.

For another example, the AP simultaneously sends query frames to the both terminal devices on each of the multiple direct links, where the query frames are used to instruct the both terminal devices on each of the multiple direct links to simultaneously send, after receiving the query frames, sounding results to the access point. That the AP simultaneously sends query frames to the both terminal devices on each of the multiple direct links means that, the AP simultaneously sends query frames to both terminal devices on a same direct link, and also simultaneously sends query frames to the multiple direct links.

Alternatively, it may further be that, the AP first simultaneously sends query frames to both terminal devices on one of the direct links in the scheduled link set, where the query frames are used to instruct the both terminal devices to send, after receiving the query frames, sounding results to the access point, so that the AP can simultaneously receive the sounding results sent by the both terminal devices. Then, the AP simultaneously sends query frames to both terminal devices on another direct link in the scheduled link set, and so on, and the AP sequentially sends the query frames to the both terminal devices on the direct links in the scheduled link set.

For a time at which the AP sends a query frame, there are two situations, where in a first situation, sounding results are obtained by the terminal devices in the scheduled link set by performing a sounding after the LSP begins, and in a second situation, sounding results are already obtained by the terminal devices in the scheduled link set before the LSP begins.

In the first situation, the AP begins to send a query frame after the sounding period ends, that is, after the terminal devices in the scheduled link set already send sounding frames.

Specifically, the AP simultaneously sends query frames to all terminal devices in the scheduled set, and the query frames are used to instruct all the terminal devices to simultaneously send, after receiving the query frames, sounding results to the AP. Specifically, a terminal device may send a sounding result by sending a reporting frame to the AP. Certainly, in an actual application, the reporting frame may also be another frame that can include a sounding result, which is not limited herein.

Alternatively, specifically, after an SIFS away from a time at which a terminal device in the scheduled link set sends a last sounding frame, the AP sequentially sends query frames to a terminal device group at transmit ends of direct links in the scheduled link set. After one SIFS away from a time at which a reporting frame fed back by a last terminal device of the group is received, the AP sequentially sends query frames to a terminal device group at receive ends of the direct links, and so on.

In the second situation, the AP may begin to send a query frame immediately after the LSP begins.

403: The access point sends information about the allocated channel resource to the both terminal devices on each of the multiple direct links, so that the both terminal devices on each of the multiple direct links separately communicate with a peer party by using a channel resource allocated by the access point to the terminal devices.

For a detailed description, refer to the description of step 103 in the embodiment shown in FIG. 1.

In this embodiment, preferably, a query frame is set to an NDP frame, to enable a query period to occupy an as short as possible time, thereby improving efficiency.

As shown in FIG. 9, FIG. 9 is a schematic structural diagram of an NDP query frame. A structure of the NDP query frame is similar to a structure of the NDP polling frame shown in FIG. 8, and different from the NDP polling frame shown in FIG. 8, Cmd being "11" indicates that this is an NDP query frame. A value of T/R being "0" indicates that this query frame requires an initiating party of a direct link to send a report, and the value being "1" indicates that this query frame requires an accepting party of the direct link to send a report. The meaning of the Color field is the same as the meaning of a field having a same name in the polling frame. If a quantity of direct links scheduled once exceeds N_{ch}, more bits may be used to indicate a sequence number of a current reporting step. For example, T/R may be extended to a field of multiple bits, a value indicates a current step quantity. For example, when the value is 0, 2, or 4, a link initiating party sends a report, and when the value is 1, 3, or 5, a link accepting party sends a report. Only N_{ch} terminal devices can send reports each time. Therefore, each terminal device may calculate, according to information about whether the terminal device is the initiating party or the accepting party and a total quantity of scheduled links, a value of T/R at which it should be the turn of the terminal device to send a report, and may calculate, according to a location of a link LID of the terminal device in a link list, a number of a sub-channel that the terminal device should use to send the report.

Another structure of the NDP query frame may be the same as the structure of the NDP polling frame. Cmd being "11" indicates that this is an NDP query frame, and LID-I plus T/R indicates a terminal device that is queried. Such multiple query frames are simultaneously sent to the queried terminal device (that is, downlink OFDMA) on a direct link sub-channel indicated in the scheduling information (explicitly or implicitly indicated), and terminal devices receive query frames on the direct link sub-channel indicated in the scheduling information. The queried terminal device sends a sounding result to the AP (uplink OFDMA) on the sub-channel receiving the query frame after a fixed time (SIFS) after the query frame ends.

In this embodiment, the AP sends a query frame to each terminal device in the scheduled link set to obtain a sounding result. In an actual application, the AP may not send a query frame, but sends reporting triggering frames to both terminal devices on direct links in the scheduled link set, where the reporting triggering frames are used to instruct the both terminal devices on the direct links in the scheduled link set to sequentially send sounding results to the access point according to the information about the reporting sequence.

Specifically, in step 401, the direct link scheduling information that is multicast or broadcast by the AP further includes an arrangement sequence of the direct links in the scheduled link set, and the arrangement sequence is used to indicate the reporting sequence of the direct links. Specifically, for example, the AP multicasts or broadcasts a schedule frame carrying an LID list. The schedule frame is further used to instruct the terminal devices in the scheduled link set to send sounding results according to an arrangement sequence of LIDs in the LID list.

Specifically, the AP may specify that after first-party terminal devices on the direct links in the scheduled link set sequentially send a sounding result, second-party terminal devices on the direct links then sequentially send a sounding result, or may specify that after a first-party terminal device and a second-party terminal device on a direct link sequentially send a sounding result, a first-party terminal device and a second-party terminal device on a next direct link then send a sounding result. In this way, because the AP does not send a query frame, and a process of obtaining a sounding result is shorter, channel efficiency is higher.

In this embodiment, the reporting triggering frame may be a frame obtained by removing the T/R field from the query frame shown in FIG. 9.

In this embodiment, the AP may specify that, both terminal devices on each direct link in the scheduled link set sequentially send sounding results to the AP by using a same sub-channel, and both terminal devices on different direct links send sounding results to the AP by using different sub-channels. That is, an OFMDA (Orthogonal Frequency Division Multiple Access, Orthogonal Frequency Division Multiple Access) sending manner is used.

When the OFMDA manner is used, sending of a sounding result may be completed in two steps. In a first step, initiating parties of all the direct links in the scheduled link set simultaneously send sounding results, and in a second step, accepting parties of all the direct links in the scheduled link set simultaneously send sounding results. If a first-party terminal device and a second-party terminal device are not distinguished, both terminal devices on every N_{ch}/2 direct links, that is, totally N_{ch} terminal devices may simultaneously send sounding results to the AP by separately using different sub-channels. Alternatively, in a case in which a quantity of the direct links in the scheduled link set is relatively small, the AP may specify that, the terminal devices in the scheduled link set simultaneously complete sending of sounding results in one step by separately using different sub-channels.

In an actual application, the AP may enable all related terminal devices to complete sending of reports in one step according to a quantity of scheduled links, or at least two steps may be needed.

Specifically, for example, if a quantity of direct links in the scheduled link set is n, and a quantity of sub-channels is N_{ch}, a least quantity of needed steps is rounding-up of (n*2/N_{ch}). For example, when N_{ch}=8, and n=3, one step is needed. Certainly, report sending may also be completed in two steps of an initiating party and an accepting party. For another example, when N_{ch}=8, and n=5, at least two steps are needed to complete sending of all reports. For purpose of simplicity, for this manner, it is preferably specified that, a quantity of direct links in a set of links scheduled each time does not exceed N_{ch}, and two steps are fixedly used during report sending. In one step, initiating parties of all the direct links in the scheduled link set simultaneously send sounding results on different sub-channels, and in the other step, accepting parties of all the direct links in the scheduled link set simultaneously send sounding results on different sub-channels.

The AP may specify that, each terminal device determines, according to an arrangement sequence of direct links in the schedule frame, a number of a sub-channel that is selected by the terminal device and that is used to send a sounding result. For example, LID-1 is an identifier of a direct link from a terminal device 1 to a terminal device 2, and occurs at a first location of the LID list. Therefore, the terminal device 1 sends a sounding result on a first sub-channel in a first step, and the terminal device 2 sends a sounding result on the first sub-channel in a second step. Moreover, LID-2 is an identifier of a direct link from a terminal device 3 to a terminal device 4, and occurs at a second location of the LID list. Therefore, the terminal device 3 sends a sounding result on a second sub-channel in a first step, and the terminal device 4 sends a sounding result on the second sub-channel in a second step, and the rest can be deduced by analogy.

In the foregoing embodiments, direct link scheduling methods of the present invention are described in detail from a side of an access point, and direct link scheduling methods of the present invention are described in detail below from a side of a terminal device.

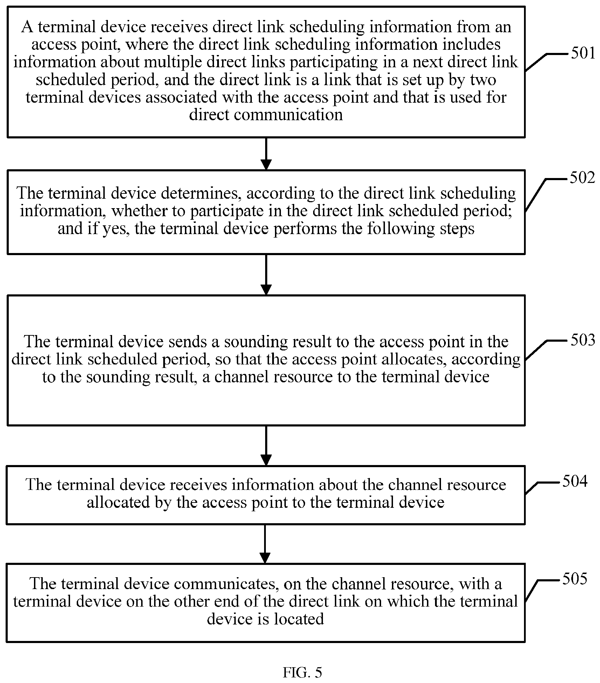

Referring to FIG. 5, a direct link scheduling method in an embodiment of the present invention includes the following steps.

In this embodiment, information about a direct link may include MAC address information of two terminal devices on the direct link, and certainly may further include other information, which is not limited herein. Transport stream information is a parameter used to describe a characteristic of the transmitted data, for example, identifier information of a terminal to which the transport stream belongs, a transmission direction, a service period interval (that is, a time interval between two time of neighboring data transmission on the direct link), an amount of data to be transmitted in each service period or a data rate (that is, an amount of data transmitted per second on the direct link), which is not limited herein.

501: A terminal device receives direct link scheduling information from an access point, where the direct link scheduling information includes information about multiple direct links participating in a next direct link scheduled period, and the direct link is a link that is set up by two terminal devices associated with the access point and that is used for direct communication.

When a terminal device needs to send data to another terminal device, or receives data sent by another user, there are multiple methods for transmitting data between the two terminal devices. One of the methods is that a terminal device that is a data sending party sends a management message requesting to set up a direct link to an AP of a wireless local area network to which the terminal device belongs, the AP forwards the request to a terminal device that is a data receiving party, and after receiving the request, the terminal device that is the data receiving party may set up a direct link, and transmit data by using the direct link. A terminal device described in this embodiment refers to any one of terminal devices located on the direct link that is already set up.

In this embodiment, before data transmission, direct links do not contend for respective channel resources of the AP, and instead, the AP actively schedules a direct link. That is, the AP provides a transmission opportunity to a terminal device on the direct link according to a need of the direct link on a proper occasion, and allocates a channel resource to the direct link. The direct link scheduled period (Link Scheduled Period, LSP) is a period needed by scheduling performed by the AP on a batch of direct links once. In each LSP, the AP may schedule all controlled direct links, or may schedule only some direct links of all the direct links.

Therefore, before each LSP begins, the AP multicasts or broadcasts direct link scheduling information. The direct link scheduling information includes information about multiple direct links participating in a next direct link scheduled period, so as to indicate that all the multiple direct links participate in the next LSP. For convenience of description, a link set formed by multiple direct links participating in a next LSP is referred to as a scheduled link set below. Terminal devices on all direct links in the scheduled link set are referred to as terminal devices in the scheduled link set.

Specifically, for example, the AP multicasts or broadcasts an LSP schedule frame, where the LSP schedule frame includes direct link scheduling information. When a terminal device receives the LSP schedule frame, it indicates that an LSP is immediately entered currently. Alternatively, the AP may multicast or broadcast another periodic broadcast frame carrying direct link scheduling information and an LSP start time, for example, a beacon frame Beacon frame.

502: The terminal device determines, according to the direct link scheduling information, whether to participate in the direct link scheduled period; and if yes, the terminal device performs the following steps.

The terminal device determines whether the terminal device belongs to a direct link in the scheduled link set in the direct link scheduling information, and if yes, it indicates that the terminal device is to participate in a next LSP, and then keeps a sober state to participate in a subsequent step; otherwise, the terminal device may be dormant until the LSP ends. Certainly, the terminal device may be not dormant, but because the terminal device does not participate in the next LSP, adjustment to a dormant state may save power.

503: The terminal device sends a sounding result to the access point in the direct link scheduled period, so that the access point allocates, according to the sounding result, a channel resource to a direct link on which the terminal device is located.

During data transmission, an initiating party of a direct link needs a channel resource to transmit data to an accepting party of the direct link, and the accepting party needs a channel resource to send an acknowledgement message to the initiating party, and therefore the access point needs to send, to both terminal devices, channel resources allocated to the direct link on which the initiating party and the accepting party are located. Optionally, the access point may separately send, to the both terminal devices by sending two messages, the channel resources allocated to the direct link, or the access point may broadcast only one message, where the message includes the channel resources allocated to the direct link, so that the both terminal devices on the direct link can receive the message, and then can learn the channel resources allocated to the direct link.

In an LSP, a sounding result sent by the terminal device to the AP may be a sounding result obtained by the terminal device by performing a sounding after the LSP begins, where the sounding refers to that each terminal device sequentially sends a message used to perform a test, so that another terminal device in the scheduled link set determines whether the message that is used to perform a test and that is sent from the terminal device can be detected. If a terminal device A can sense a message that is used to perform a test and that is sent by a terminal device B, and the terminal device A and the terminal device B are separately located on different direct links in the scheduled link set, a direct link on which the terminal device A is located and a direct link on which the terminal device B is located interfere with each other.

During a sounding, unit link power used when each terminal device sends a test message is the same as unit link power used during subsequent data transmission, so as to test whether direct links at the unit link power interfere with each other, so that the access point may allocate a same channel resource to direct links that do not interfere with each other. In this way, the access point may properly allocate as many as possible channel resources to the direct links in the scheduled link set, thereby improving channel use efficiency.

Because of relative-location stationarity or low-speed motility of a terminal device in a WiFi network, a location of the terminal device basically does not change in a time, and therefore the sounding results may also be sounding results obtained by the terminal device by performing a sounding at any moment before the LSP, which is not limited herein. A sounding result sent by a terminal device may be a sounding result of the terminal device on an operating channel of the AP, or may be a sounding result on a non-operating channel of the AP, which is not limited herein.

When a terminal device sends a sounding result, the sounding result may be sent in an LSP when the AP queries the terminal device, or the sounding result may be sent to the AP in an LSP according to a prescribed time preset by the AP and a sub-channel, which is not limited herein.

In this embodiment, the channel resources include a spectrum resource and a time resource. After obtaining a scheduled link set, the AP may arrange all direct links in the scheduled link set to perform data transmission in a same period of time, or direct links in the scheduled link set may be divided into at least two batches of direct links, where a same batch of direct links transmit data in a same period of time, and different batches of direct links transmit data in different periods of time.

Direct links in the scheduled link set may perform transmission on different sub-channels at the same time. However, in consideration of unequal amounts of data to be transmitted on direct links, to more effectively use channel resources, it may be not that each direct link equally uses a sub-channel (that is, a spectrum resource), but it may be that this direct link uses two or more sub-channels, while another direct link uses only one sub-channel. It may be further that multiple direct links perform time division transmission on a same sub-channel resource.

In an actual application, a case in which if some direct links use a same spectrum resource to transmit data at the same time, the direct links interfere with each other may occur in the scheduled link set determined by the AP. Therefore, before allocating a channel resource to the scheduled link set, a terminal device needs to send a sounding result to the AP. The sounding result may include information about an interfering terminal, the interfering terminal refers to another terminal device that interferes with the terminal device, and the another terminal device is a terminal device in the scheduled link set on another direct link except a direct link on which the terminal device sending the sounding result is located. Therefore, sub-channels or transmission time in the channel resources that the AP can allocate, during subsequent channel resource arrangement according to the sounding results, to a direct link on which the terminal device sending the sounding result is located and the direct link on which the interfering terminal is located are or is different, so as to avoid a case in which the direct links interfere with each other. Moreover, a same spectrum resource and a same time resource may be allocated, that is, a same sub-channel resource and a same period of time are allocated to direct links on which terminal devices not interfering with each other are separately located.

Specifically, information about an interfering terminal in a sounding result of a terminal device may be a list of addresses of interfering terminals, or link identifier plus link role information, where the link role information is used to indicate a (for example, sending-party or receiving-party) terminal device in a direct link on which the interfering terminal is located that the interfering terminal is. If the terminal device can sense a signal from a terminal device on another direct link in the scheduled link set, detected indication information (an address, or link identifier + link role information) of the terminal device may be added to the information about an interfering terminal.

Alternatively, a case in which some sub-channels interfere with a direct link on which the terminal device is located may further occur, that is, when the direct link transmits data on some sub-channels, there is a noise or an interfering signal. Therefore, a sounding result of a terminal device may include sub-channels available or unavailable for the terminal device, so that when the AP allocates a channel resource, sub-channels in the channel resource allocated to the terminal device do not include the sub-channels unavailable for the terminal device, or sub-channels in the channel resource allocated to the terminal device are selected from the sub-channels available for the terminal device.

Generally, for direct links in a scheduled link set, channel resources allocated by the AP to both terminal devices located on a same direct link are the same. For convenience of description, a channel resource allocated to the terminal device is also referred herein to as a channel resource allocated to a direct link on which the terminal device is located, or a channel resource allocated to the direct link, where the direct link refers to a direct link on which the terminal device is located.

504: The terminal device receives information about the channel resource allocated by the access point to the direct link on which the terminal device is located.

After allocating a channel resource to a terminal device, the AP sends information about the channel resource to the terminal device. The terminal device receives the information about the channel resource.

505: The terminal device communicates, by using the channel resource, with a terminal device on the other end of the direct link on which the terminal device is located.

After both terminal devices on a direct link receive the information about the channel resource sent by the AP, the both terminal devices communicate with respective peer terminal devices on the channel resource.

In this embodiment, both terminal devices on multiple direct links in a next direct link scheduled period send sounding results to the access point, so that an access point allocates channel resources to direct links and a terminal device on each direct link does not need to contend for a channel, which can avoid channel contention between different direct links and reduce a probability that a conflict occurs because of the channel contention, thereby improving channel use efficiency of multiple direct links. Moreover, the sounding result includes information about a sub-channel available or unavailable for the terminal device sending the sounding result, so that sub-channels in channel resources allocated by the access point to the terminal devices according to the sounding results do not include the sub-channels unavailable for the terminal devices, or sub-channels in channel resources allocated to the terminal devices are selected from the sub-channels available for the terminal devices; or the sounding result includes information about an interfering terminal, so that sub-channels or transmission time in channel resources allocated by the access point to the terminal devices and the interfering terminal of the terminal devices according to the sounding results are or is different. In this way, the direct links can be prevented from operating on a channel interfering with the direct links, or the direct links can be prevented from interfering with each other during data transmission, thereby improving channel utilization efficiency.

In the foregoing embodiment, a terminal device sends a sounding result to the AP. The sounding result may be a sounding result obtained by the terminal device that performs a sounding after the LSP begins. How a terminal device performs a sounding in an embodiment of the present invention is described below. Referring to FIG. 6, a direct link scheduling method in another embodiment of the present invention includes the following steps.

601: A terminal device receives direct link scheduling information from an access point, where the direct link scheduling information includes information about multiple direct links participating in a next direct link scheduled period, and the direct link is a link that is set up by two terminal devices associated with the access point and that is used for direct communication.

For a detailed description, refer to the description of step 501 in the embodiment shown in FIG. 5.

602: The terminal device determines, according to the direct link scheduling information, whether to participate in the direct link scheduled period; and if yes, the terminal device performs the following steps.

For a detailed description, refer to the description of step 502 in the embodiment shown in FIG. 5.

603: The terminal device performs a sounding operation according to an indication of the access point in the direct link scheduled period.

In this embodiment, after the LSP starts, the AP instructs terminal devices on direct links in the scheduled link set to undergo a sounding period. In the sounding period, terminal devices in the scheduled link set perform a sounding operation.

Specifically, a terminal device sends a sounding frame according to the indication of the access point, so that another terminal device on the multiple direct links except the terminal device records whether the sounding frame is detected, and the sounding frame carries information used to uniquely indicate a sender.

After an LSP is entered, the AP performs an indication in multiple manners. For example, the AP sequentially sends a polling frame to each terminal device. When the terminal device receives the polling frame from the AP, the terminal device sends a sounding frame, so that another terminal device on the multiple direct links except the terminal device sending the sounding frame records whether the sounding frame is detected.

Alternatively, the indication sent by the AP may be an LSP schedule frame, and an arrangement sequence of terminal devices is set in the LSP schedule frame. When receiving the LSP schedule frame, the terminal devices sequentially send sounding frames according to the arrangement sequence. In this case, a terminal device may calculate, according to an arrangement sequence on which the terminal device is located, a time that needs to be awaited from receiving the LSP schedule frame to send the sounding frame, and after waiting the awaited time, the terminal device sends the sounding frame.

In an actual application, two terminal devices on a direct link both use appropriate power to send a sounding frame to a peer party, and the power is transmit power used to enable receive power measured by a terminal device of a data receiving party when receiving a frame from a terminal device of a data sending party to be greater than a first value and less than a second value, for example, is minimum power needed by the direct link in normal communication or a specified fixed value. For convenience of description, the power is referred to as link power. When link power is determined by means of interaction, on a same direct link, link power used when a data sending party sends data may be the same as or different from link power used when a data receiving party sends an answer frame to the data sending party, which is determined by means of interaction between the both parties on the link. The present invention does not specify how both parties on a direct link determine link power of the both parties. Both communication parties on a direct link communicate by using link power with an objective of ensuring that when this direct link normally communicates, a communication signal on this direct link is made to cover a relatively small range as much as possible, so that multiple direct links simultaneously communicate relatively easily.

A terminal device is always in a sensing state except when the terminal device sends a sounding frame and when another terminal device in the scheduled link set sends a sounding frame, so as to determine that the terminal device can sense a sounding frame from a terminal device on another direct link. If a terminal device can sense a sounding frame from a terminal device on another direct link, a sounding result of the terminal device records indication information of the terminal device sending the sounding frame.

In this way, when the sounding result of the terminal device records that a sounding frame from any terminal device on another direct link in the scheduled link set except the direct link on which the terminal device is located is detected, the terminal device that the sounding frame is from is an interfering terminal of the terminal device sensing the sounding frame. In an actual application, the sounding result of the terminal device may further record that a sounding frame from another terminal device on the direct link on which the terminal device is located is detected, or may perform no record, which is not limited herein.

It should be noted that, herein, the mentioned "not sensing" may be understood as that a terminal device actually completely has not detected a signal, or because a detected signal is excessively weak, content in the signal cannot be demodulated, or a signal is relatively weak and insufficient to affect normal communication on this direct link, and the mentioned "sensing" is that a signal is detected and a signal strength is relatively strong so as to affect normal communication of this direct link.

In this embodiment, the terminal device may send and sense a sounding frame on all channels of the AP, or may send a sounding frame on a sub-channel of the AP and sense, on the sub-channel or all channels, a sounding frame sent by another terminal device, or may send and sense a sounding frame on a designated sub-channel of the AP, which is not limited herein. Moreover, a terminal device sends a frame on all channels of the AP in two manners. For one manner, a frame is sent by using all the channels as a wide channel, content of the frame is distributed on all the channels, and a time needed to send a frame completely is relatively short. For the other manner, content of a frame is replicated on each sub-channel of all the channels, that is, each sub-channel sends the content of the same frame. Alternatively, the two manners may be combined, some content (for example, a physical header part) is replicated on each sub-channel and sent, and other content is distributed on all channels and sent, which is not limited herein. Preferably, a terminal device selects sub-channels to perform replication and sending, which may be compatible with a conventional WiFi device, and also helps the terminal device, in a case of finding that interference exists in some sub-channels, be capable of correctly receiving content of a frame on some other sub-channels.

604: The terminal device sends a sounding result to the access point, so that the access point allocates, according to the sounding result, a channel resource to a direct link on which the terminal device is located.

When all terminal devices participating in the current LSP send sounding frames completely, the terminal devices separately send respective sounding results to the AP. Specifically, when receiving a query frame from the AP, a terminal device may send the sounding result to the AP. Alternatively, when receiving a triggering frame of the AP, a terminal device may calculate, according to a predetermined sending order, a time point of sending a sounding result.

In an actual application, the terminal devices in the scheduled link set may send reporting frames in multiple manners. For example, the terminal devices may use a time division sending manner.

Alternatively, the terminal devices may use an OFMDA sending manner. Specific examples are described below.

If the terminal device is a first-party terminal device on the direct link on which the terminal device is located, sending, by the terminal device, the sounding result at the same time when a first-party terminal device on another direct link of the multiple direct links except the direct link on which the terminal device is located sends a sounding result; or if the terminal device is a second-party terminal device on the direct link on which the terminal device is located, sending, by the terminal device, the sounding result at the same time when a second-party terminal device on another direct link of the multiple direct links except the direct link on which the terminal device is located sends a sounding result.

Preferably, the terminal device and the terminal device on the other end of the direct link on which the terminal device is located further sequentially send sounding results to the access point according to an indication of the access point by using a same sub-channel, and the terminal device and a terminal device on another direct link of the multiple direct links except the direct link on which the terminal device is located send sounding results to the access point by using different sub-channels.

That is, when the OFMDA manner is used, sending of a sounding result may be completed in two steps. In a first step, first-party terminal devices on all the direct links in the scheduled link set send sounding results, and in a second step, second-party terminal devices on all the direct links in the scheduled link set send sounding results. Actually, all terminal devices are enabled to complete sending of sounding results in one step according to a quantity of direct links in the scheduled link set, or at least two steps may be needed.

Specifically, for example, if a quantity of direct links in the scheduled link set is n, and a quantity of sub-channels is N_{ch}, a least quantity of needed steps is rounding-up of (n*2/N_{ch}). For example, when N_{ch}=8, and n=3, one step is needed. Certainly, report sending may also be completed in two steps of an initiating party and an accepting party. For another example, when N_{ch}=8, and n=5, at least two steps are needed to complete sending of all reports. For purpose of simplicity, for this manner, the AP is preferably specified that, a quantity of direct links in a set of links scheduled each time does not exceed N_{ch}, and two steps are fixedly used during report sending. In one step, initiating parties of all the direct links in the scheduled link set send sounding results, and in one step, accepting parties of all the direct links in the scheduled link set send sounding results. Each terminal device may determine, according to a sequence of LIDs in an LID list in the LSP schedule frame, a number of a sub-channel that is selected by the terminal device and that is used to send a sounding result. For example, LID-1 is an identifier of a direct link from a terminal device 1 to a terminal device 2, and occurs at a first location of the LID list. Therefore, the terminal device 1 sends a sounding result on a first sub-channel in a first step, and the terminal device 2 sends a sounding result on the first sub-channel in a second step. Moreover, LID-2 is an identifier of a direct link from a terminal device 3 to a terminal device 4, and occurs at a second location of the LID list. Therefore, the terminal device 3 sends a sounding result on a second sub-channel in a first step, and the terminal device 4 sends a sounding result on the second sub-channel in a second step, and the rest can be deduced by analogy. Alternatively, the terminal devices may not use the OFMDA sending manner. Another manner in which a terminal device sends a sounding result is described below.

The terminal device sends the sounding result at the same time when the terminal device on the other end of the direct link on which the terminal device is located sends a sounding result. Specifically, the direct link on which the terminal device is located and another direct link in the scheduled set may simultaneously send sounding results.

Alternatively, sending of sounding results may be completed in N steps, where N is a quantity of the direct links in the scheduled link set. In a first step, both terminal devices on a first direct link simultaneously send sounding results to the AP by separately using different sub-channels; in a second step, both terminal devices on a second direct link simultaneously send sounding results to the AP by separately using different sub-channels, and the rest can be deduced by analogy, until both terminal devices on an N^{th} direct link simultaneously send sounding results to the AP by separately using different sub-channels.

Alternatively, the direct link scheduling information may further include information about a reporting sequence of the multiple direct links. Specifically, the direct link scheduling information further includes an arrangement sequence of the direct links in the scheduled link set, and the arrangement sequence is used to indicate the reporting sequence of the direct links. The terminal device sends the sounding result to the access point according to the information about the reporting sequence.

605: The terminal device receives information about the channel resource allocated by the access point to the direct link on which the terminal device is located.

For a detailed description, refer to the description of step 504 in the embodiment shown in FIG. 5.

606: The terminal device communicates, by using the channel resource, with a terminal device on the other end of the direct link on which the terminal device is located.

For a detailed description, refer to the description of step 505 in the embodiment shown in FIG. 5.

In this embodiment, a terminal device performs a sounding operation in an LSP according to an indication of the AP to obtain a sounding result, so that the AP allocates a channel resource according to the recently obtained sounding result, and the channel resource allocated to the terminal device can better conform to an actual situation of the terminal device.

In this embodiment, a terminal device sends a sounding frame to a peer party on a direct link on which the terminal device is located. Preferably, the sounding frame is an NDP frame, so as to shorten a time occupied by a sounding period, thereby improving scheduling efficiency of the access point. The NDP sounding frame may have multiple structures. Specifically, for example, as shown in FIG. 8, FIG. 8 is a schematic structural diagram of an NDP sounding frame. A structure of the NDP sounding frame is roughly consistent with a structure of the NDP polling frame, and a difference is the Cmd field. When Cmd is "01", it indicates that this is an NDP sounding frame. Content of remaining fields are the same as that of fields having same names in the NDP polling frame. In the sounding frame, LID-I plus T/R is used to indicate a terminal device that sends the sounding frame, this is, information about the terminal device that sends the sounding frame. For example, a first LID in the LID list in the LSP schedule frame is LID-1, and is a direct link from a terminal device 1 to a terminal device 2. When the terminal device 1 sends a sounding frame, T/R is set to "0", and a value of LID-I is 0, and when the terminal device 2 sends a sounding frame, T/R is set to "1", and a value of LID-I is 0. For other content, refer to corresponding description about the NDP polling frame. A Color field in an NDP sounding frame is used to indicate a BSS to which a terminal device sending this frame belongs, that is, an AP associated with the terminal device.

In this embodiment, a terminal device needs to send the sounding result to the access point. Specifically, the terminal device may send the sounding result to the access point by means of a reporting frame. An ordinary action management frame may be used as the reporting frame, where a sounding result reporting information element is used to carry content that needs to be reported. As shown in FIG. 10, FIG. 10 is a schematic structural diagram of a format of a reporting frame. The reporting frame includes a sounding result reporting element, where the sounding result reporting element includes three fields: a T-result, an R-result and an available sub-channel.

The T-result field and the R-result field are respectively information about an initiating party and information about an accepting party in the scheduled link set that can be detected by a terminal device sending a reporting frame. The T-result and the R-result indicate, in a form of bit table, whether a sounding frame of a corresponding terminal device is detected, and separately occupy integer bytes of rounding (M + 7)/8, where M indicates a quantity of LIDs in an LID list in an LSP schedule frame. Certainly, alternatively, the T-result occupies M bits and the R-result occupies M bits, and their specific formats are not limited in the present invention.

For example, if a terminal device senses that in a sounding frame, a value of a T/R field is "0" (that is, a terminal device sending the sounding frame is an initiating party of a direct link), and a value of LID-I is 1 (that is, the second one in the LID list), the second bit of the T-result, that is, T2 in FIG. 10 is set to "1". For another example, if a terminal device senses that in a sounding frame, a value of a T/R field is "1" (that is, a terminal device sending the sounding frame is an accepting party of a direct link), and a value of LID-I is 0 (that is, the first one in the LID list), the first bit of the R-result, that is, R1 in FIG. 10 is set to "1". Bits being "0" in the T-result and the R-result indicate that the sounding frame sent by the corresponding terminal device is not detected.

The available sub-channel field indicates sub-channels that the terminal device may use, or sub-channels the terminal device may not use, and the available sub-channel field may also be referred to as an unavailable sub-channel field. A form of bit table is used for the field, and each bit corresponds to a sub-channel. For example, a bit ch1 corresponds to a first sub-channel, ch2 corresponds to a second sub-channel, and the rest can be deduced by analogy. This bit table may also be referred to as a sub-channel mask. It may be defined that when a corresponding bit value is "1", it indicates that a corresponding sub-channel is available, and when a bit value is "0", it indicates a corresponding sub-channel is unavailable. A terminal device may report whether a sub-channel is available according to factors such as whether the sub-channel is interfered and has a preference. In an actual application, the reporting frame may not carry an available sub-channel. For example, it may be assumed that when the AP begins a direct link scheduled period, it means that it is clean in a range of the BSS, and sub-channel availability does not need to be considered.

In an actual application, the reporting frame further includes resource information that is needed when the terminal device subsequently sends data, for example, an amount of data that needs to be transmitted, and another information element may be used to carry the needed resource information. These technologies are existing technologies, which are not described herein.

For convenience of understanding, two direct links scheduling methods of the present invention are described below by using an actual application scenario.

When each direct link is set up, a terminal device that is a data sending party on the direct link reports information about the direct link and information about a transport stream on the direct link to an AP associated with the direct link. The AP allocates an LID to each direct link. The AP broadcasts an LSP schedule frame to begin an LSP, where the LSP schedule frame carries an the LID list, the LID list includes N direct links LID value, the N specifically value and of the AP sub-channel a quantity of consistent, and the N direct links has no any two direct links participating in to a same terminal device.

The AP broadcasts an LSP schedule frame to begin an LSP. When the AP broadcasts the LSP schedule frame, all terminal devices associated with the AP receive this frame, and determine, according to an LID list in the LSP schedule frame, whether the terminal devices participate in this LSP. If LIDs of direct links on which the terminal devices are located are in the LID list, the terminal devices keep sober and participate in a subsequent step of the LSP; otherwise, the terminal devices enter a dormant state until the LSP ends.

After an LSP begins, the LSP sequentially includes a sounding period, a reporting period and a resource allocation period. After the LSP begins, the sounding period is immediately entered, the reporting period may be immediately after the sounding period, and beginning of the reporting period may also be triggered by the AP. Moreover, the resource allocation period may be immediately after the reporting period, or may be performed at another time.

Specifically, direct link scheduling information in the LSP includes three direct links that are separately LID1, LID2 and LID3. On LID1, a terminal device being a data sending party is STA1, and a terminal device being a data receiving party is STA2. On LID2, a terminal device being a data sending party is STA3, and a terminal device being a data receiving party is STA4. On LID3, a terminal device being a data sending party is STA5, and a terminal device being a data receiving party is STA6.

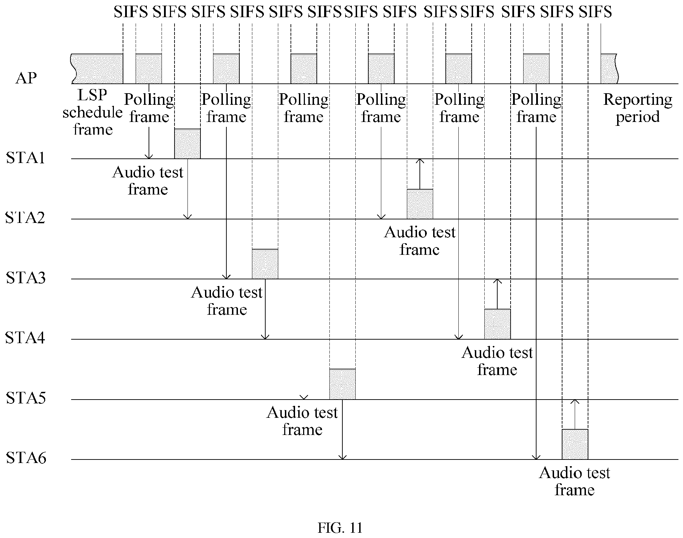

As shown in FIG. 11, FIG. 11 is a schematic diagram of an embodiment of a sounding period. In the embodiment shown in FIG. 11, according to an arrangement sequence of direct links in an LSP schedule frame, an AP first sequentially polls data sending parties on the direct links, and then sequentially polls data receiving parties on the direct links. Certainly, in an actual application, another sequence may also be used.

Specifically, in this embodiment, after one SIFS away from a time when the AP sends the LSP schedule frame, the AP sends a first polling frame to STA1. After one SIFS away from a time when the AP sends the first polling frame, STA1 sends a sounding frame to STA2 at link power of LID1, where the sounding frame carries information used to uniquely identify STA1.

After a time of two SIFSs + one sounding frame away from a time when the AP sends the LSP schedule frame, the AP sends a second polling frame to STA2. After one SIFS away from a time when the AP sends the second polling frame, STA2 sends a sounding frame to STA1 at the link power of LID1, where the sounding frame carries information used to uniquely identify STA2.

After a time of three SIFSs + two sounding frames away from a time when the AP sends the LSP schedule frame, the AP sends a third polling frame to STA3. After one SIFS away from a time when the AP sends the third polling frame, STA3 sends a sounding frame to STA4 at link power of LID2, where the sounding frame carries information used to uniquely identify STA3.

After a time of four SIFSs + three sounding frames away from a time when the AP sends the LSP schedule frame, the AP sends a fourth polling frame to STA4. After one SIFS away from a time when the AP sends the fourth polling frame, STA4 sends a sounding frame to STA3 at the link power of LID2, where the sounding frame carries information used to uniquely identify STA4.

After a time of five SIFSs + four sounding frames away from a time when the AP sends the LSP schedule frame, the AP sends a fifth polling frame to STA5. After one SIFS away from a time when the AP sends the fifth polling frame, STA5 sends a sounding frame to STA6 at link power of LID3, where the sounding frame carries information used to uniquely identify STA5.

After a time of six SIFSs + five sounding frames away from a time when the AP sends the LSP schedule frame, the AP sends a sixth polling frame to STA6. After one SIFS away from a time when the AP sends the sixth polling frame, STA6 sends a sounding frame to STA5 at the link power of LID3, where the sounding frame carries information used to uniquely identify STA6.

To improve efficiency, the sounding period preferably occupies an as short as possible time, and the polling frames and the sounding frames are preferably NDP frames.

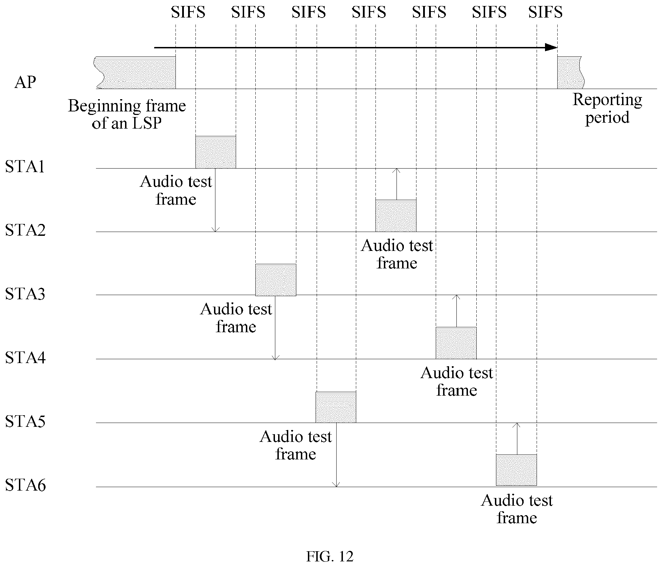

As shown in FIG. 12, FIG. 12 is a schematic diagram of another embodiment of a sounding period. In the embodiment shown in FIG. 12, an LSP schedule frame further instructs terminal devices in a scheduled link set to send sounding frames according to an arrangement sequence of LID1, LID2, and LID3, and after terminal devices being data sending parties on direct links first separately send sounding frames according to the arrangement sequence, terminal devices being data receiving parties on the direct links separately send sounding frames according to the arrangement sequence. Certainly, in an actual application, alternatively, a data sending party and a data receiving party on a direct link sequentially send sounding frames first, then a data sending party and a data receiving party on a next direct link send sounding frames, and so on, which is not limited herein.

Specifically, in this embodiment, after one SIFS away from a time when an AP sends an LSP schedule frame, STA1 sends a sounding frame to STA2 at link power of LID1. After a time of two SIFSs + one sounding frame away from a time when the AP sends the LSP schedule frame, STA3 sends a sounding frame to STA4 at link power of LID2. After a time of three SIFSs + two sounding frames away from a time when the AP sends the LSP schedule frame, STA5 sends a sounding frame to STA6 at link power of LID3.

After a time of four SIFSs + three sounding frames away from a time when the AP sends the LSP schedule frame, STA2 sends a sounding frame to STA1 at the link power of LID1. After a time of five SIFSs + four sounding frames away from a time when the AP sends the LSP schedule frame, STA4 sends a sounding frame to STA3 at the link power of LID2. After a time of six SIFSs + five sounding frames away from a time when the AP sends the LSP schedule frame, STA6 sends a sounding frame to STA5 at the link power of LID3.

In this way, a sounding period in an LSP begins when the LSP schedule frame is sent, and ends when a last terminal device in an LID list sends a sounding frame.

During the entire sounding period, except a time at which each terminal device sends a sounding frame, each terminal device senses, at remaining time, a sounding frame sent by another terminal device. Each sounding frame carries information that can indicate a sender of the sounding frame. Each terminal device records, in a reporting frame, information about a terminal device on another direct link from which each terminal device can sense a sounding frame sent by the terminal device on another direct link.

After the sounding period ends, a reporting period is immediately entered. In the reporting period, STAs in the scheduled link set separately send reporting frames (that is, sounding results) to the AP. The reporting frame includes information about another scheduled STA (that is, an interfering terminal) from which the STA senses a sounding frame that is sent by the another scheduled STA, and may further include information about a sub-channel that the STA considers unavailable.

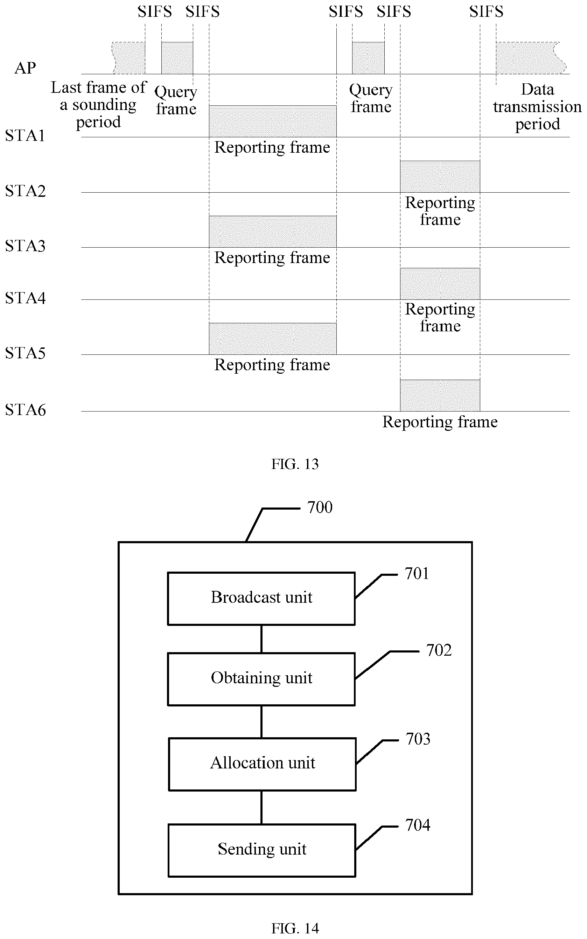

As shown in FIG. 13, FIG. 13 is a schematic diagram of an embodiment of a reporting period. In this embodiment, STAs send reporting frames to an AP in an OFDMA manner.

Specifically, in this embodiment, after one SIFS away from a time when STA6 sends a sounding frame, the AP sends a first query frame, to instruct data sending parties on all direct links in a scheduled link set to send reporting frames. After one SIFS away from a time when the AP sends the first query frame, STA1, STA2 and STA3 respectively select a first sub-channel, a second sub-channel, and a third sub-channel according to an arrangement sequence of LIDs in an LSP schedule frame to send reporting frames to the AP. The reporting frames sent by the data sending parties on the direct links further include resource request information, for example, amounts of data subsequently sent by the data sending parties to data receiving parties on the direct links, so as to help the AP allocate appropriate resources.

After simultaneously receiving reporting frames from different sub-channels, the AP sends a second query frame, to instruct the data receiving parties on all the direct links in the scheduled link set to send the reporting frames. After one SIFS away from a time when the AP sends the second query frame, STA2, STA4 and STA6 respectively select the first sub-channel, the second sub-channel, and the third sub-channel according to the arrangement sequence of the LIDs in the LSP schedule frame to send reporting frames to the AP. The reporting frames sent by the data receiving parties on the direct links have no resource request information.

Alternatively, the embodiment shown in FIG. 13 may not be used for the reporting period. Instead, the AP specifies in advance that, terminal devices sequentially send reporting frames to the AP according to the sequence of the LIDs in the LID list in the LSP schedule frame, where on each direct link, a terminal device being a data sending party first sends a reporting frame, then a terminal device being a data receiving party sends a reporting frame, and each reporting frame has a fixed length. In this way, terminal devices calculate, according to a default sequence, time points at which it is the turn of the terminal devices to send reporting frames, and directly send the reporting frames to the AP at the time points. Alternatively, the AP may further simultaneously send query frames to all terminal devices in the scheduled set. After receiving the query frames, all the terminal devices in the scheduled set simultaneously send reporting frames to the access point.

After the sounding period ends, a resource allocation period is entered.

After receiving the reporting frames sent by all the terminal devices in the LID list, the AP allocates channel resources to the terminal devices according to the resource request information of the data sending parties on the direct links. During channel resource allocation, if the AP detects a reporting frame of a terminal device to learn that the terminal device can sense a sounding frame sent by a terminal device on another direct link, an interfering terminal of the terminal device may be determined. Therefore, during channel resource allocation, sub-channels or transmission time respectively allocated to the terminal device and the interfering terminal of the terminal device are or is different. After a channel resource of each terminal device is determined, the AP sends a resource allocation frame to each terminal device on all channels, where the resource allocation frame carries a channel resource allocated to a receiver.

After terminal devices receive resource allocation frames, initiating parties on direct links transmit data by using channel resources allocated by the AP.

A direct link scheduling method in an embodiment of the present invention is described above, and an access point in an embodiment of the present invention is described below. Referring to FIG. 14, an access point 700 in an embodiment of the present invention includes:
a broadcast unit 701, configured to multicast or broadcast direct link scheduling information, where the direct link scheduling information includes information about multiple direct links participating in a next direct link scheduled period, and the direct link is a link that is set up by two terminal devices associated with the access point and that is used for direct communication;
an obtaining unit 702, configured to obtain, in the direct link scheduled period, sounding results sent by the both terminal devices on each of the multiple direct links;
an allocation unit 703, configured to separately allocate channel resources to the multiple direct links according to the sounding results in the direct link scheduled period, where
the sounding result includes information about a sub-channel available or unavailable for the terminal device sending the sounding result, and a sub-channel in a channel resource allocated by the access point to the direct link on which the terminal device sending the sounding result is located does not include the unavailable sub-channel, or a sub-channel in a channel resource allocated to the direct link on which the terminal device sending the sounding result is located is selected from the available sub-channel; and/or
the sounding result includes information about an interfering terminal, and the interfering terminal refers to a terminal device that interferes with the terminal device sending the sounding result, and that is on another direct link of the multiple scheduled direct links except the direct link on which the terminal device sending the sounding result is located, and sub-channels or transmission time in channel resources respectively allocated by the access point to the direct link on which the terminal device sending the sounding result is located and the direct link on which the interfering terminal is located are or is different; and
a sending unit 704, configured to send information about the allocated channel resource to the both terminal devices on each of the multiple direct links, so that the both terminal devices on each of the multiple direct links separately communicate with a peer party by using a channel resource allocated by the access point to the direct link.

In this embodiment of the present invention, an access point allocates channel resources to direct links and a terminal device on each direct link does not need to contend for a channel, which can avoid channel contention between different direct links and reduce a probability that a conflict occurs because of the channel contention, thereby improving channel use efficiency of multiple direct links. Moreover, the access point obtains sounding results sent by both terminal devices on each of the multiple direct links in a next direct link scheduled period, where the sounding result includes information about a sub-channel available or unavailable for the terminal device sending the sounding result, so that sub-channels in channel resources allocated by the access point to the terminal devices according to the sounding results do not include the sub-channels unavailable for the terminal devices, or sub-channels in channel resources allocated to the terminal devices are selected from the sub-channels available for the terminal devices; or the sounding result includes information about an interfering terminal, so that sub-channels or transmission time in channel resources allocated by the access point to the terminal devices and the interfering terminal of the terminal devices according to the sounding results are or is different. In this way, the direct links can be prevented from operating on a channel interfering with the direct links, or the direct links can be prevented from interfering with each other during data transmission, thereby improving channel utilization efficiency.

Preferably, terminal devices on any two of the multiple direct links do not include a same terminal device, so that the AP can arrange any two direct links in the scheduled link set to simultaneously transmit data.

Preferably, a link quantity of the multiple direct links is equal to a quantity of sub-channels included in an operating channel of the access point. In this way, an effect obtained by integrating a success rate at which the AP schedules the direct links in the scheduled link set and overheads that are generated because of scheduling is best.

Preferably, the direct link scheduling information includes link identifiers of the multiple direct links, or includes link identifiers of the multiple direct links and a start time of the direct link scheduled period.

In the foregoing embodiment, the access point multicasts or broadcasts direct link scheduling information, so as to indicate a direct link participating in a next LSP. In an actual application, the access point multicasts or broadcasts the direct link scheduling information in multiple manners, and specifically, the access point may multicast or broadcast the direct link scheduling information by using a method for multicasting or broadcasting a schedule frame.

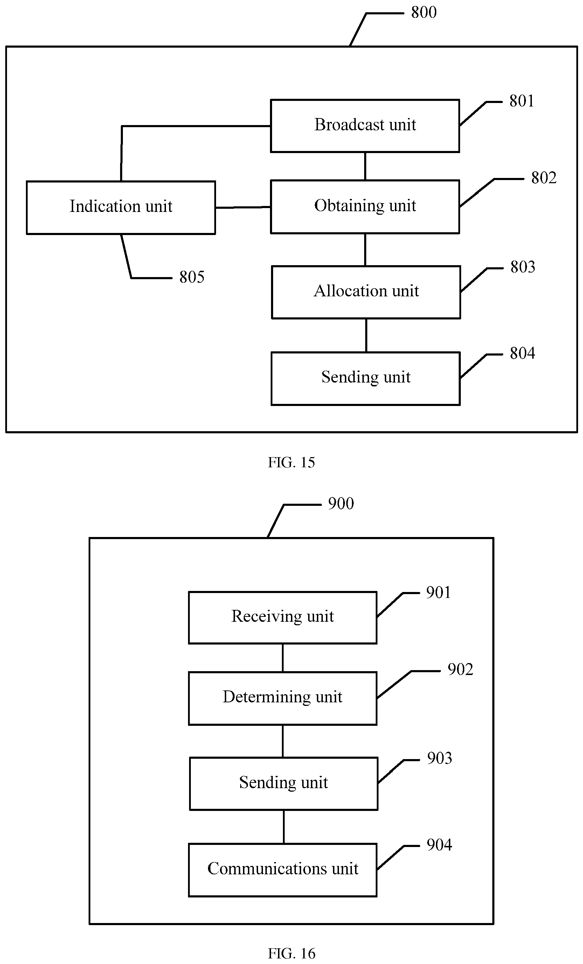

In the foregoing embodiment, the access point obtains the sounding results sent by the terminal devices on the multiple direct links. The sounding results may be sounding results obtained by terminal devices in the scheduled link set that perform a sounding after the LSP begins. Referring to FIG. 15, an access point 800 in an embodiment of the present invention includes:
a broadcast unit 801, configured to multicast or broadcast direct link scheduling information, where the direct link scheduling information includes information about multiple direct links participating in a next direct link scheduled period, and the direct link is a link that is set up by two terminal devices associated with the access point and that is used for direct communication;
an obtaining unit 802, configured to obtain, in the direct link scheduled period, sounding results sent by the both terminal devices on each of the multiple direct links;
an allocation unit 803, configured to separately allocate channel resources to the multiple direct links according to the sounding results in the direct link scheduled period, where
the sounding result includes information about a sub-channel available or unavailable for the terminal device sending the sounding result, and a sub-channel in a channel resource allocated by the access point to the direct link on which the terminal device sending the sounding result is located does not include the unavailable sub-channel, or a sub-channel in a channel resource allocated to the direct link on which the terminal device sending the sounding result is located is selected from the available sub-channel; and/or
the sounding result includes information about an interfering terminal, and the interfering terminal refers to a terminal device that interferes with the terminal device sending the sounding result, and that is on another direct link of the multiple scheduled direct links except the direct link on which the terminal device sending the sounding result is located, and sub-channels or transmission time in channel resources respectively allocated by the access point to the direct link on which the terminal device sending the sounding result is located and the direct link on which the interfering terminal is located are or is different; and
a sending unit 804, configured to send information about the allocated channel resource to the both terminal devices on each of the multiple direct links, so that the both terminal devices on each of the multiple direct links separately communicate with a peer party by using a channel resource allocated by the access point to the direct link.

In this embodiment, the access point further includes:
an indication unit 805, configured to: before the obtaining unit 802 obtains the sounding results sent by the both terminal devices on each of the multiple direct links, instruct the both terminal devices on each of the multiple direct links to sequentially perform a sounding operation.

In this way, the AP may allocate channel resources according to recently obtained sounding results, and the channel resources allocated to the direct links can better conform to an actual situation of the direct links.

Preferably, the indication unit 805 is specifically configured to sequentially send a polling frame to the both terminal devices on each of the multiple direct links, where the polling frame is used to instruct a terminal device receiving the polling frame to send a sounding frame, so that another terminal device on the multiple direct links except the terminal device sending the sounding frame records whether the sounding frame is detected, and the sounding frame carries information used to uniquely indicate a sender. Further, preferably, the polling frame is a null data packet, which enables the sounding period to occupy an as short as possible time, thereby improving efficiency.

Alternatively, preferably, the direct link scheduling information further includes information about a sounding sequence of the both terminal devices on each of the multiple direct links.

The indication unit 805 is specifically configured to send a sounding triggering frame, where the sounding triggering frame is used to instruct the both terminal devices on each of the multiple direct links to sequentially send a sounding frame according to the sounding sequence, so that another terminal device on the multiple direct links except the terminal device sending the sounding frame records whether the sounding frame is detected, and the sounding frame carries information used to uniquely indicate a sender.

Alternatively, preferably, the broadcast unit 801 is specifically configured to multicast or broadcast a schedule frame, where the schedule frame carries the direct link scheduling information. The direct link scheduling information further includes information about a sounding sequence of the both terminal devices on each of the multiple direct links.

The indication unit 805 specifically instructs, by using the schedule frame, the both terminal devices on each of the multiple direct links to sequentially send a sounding frame according to the sounding sequence, so that another terminal device on the multiple direct links except the terminal device sending the sounding frame records whether the sounding frame is detected, and the sounding frame carries information used to uniquely indicate a sender.

In the embodiments shown in FIG. 14 and FIG. 15, the obtaining unit is configured to obtain the sounding results, on the operating channel of the access point, of the terminal devices on the multiple direct links. In an actual application, the obtaining unit may obtain sounding results by using multiple methods.

Preferably, the both terminal devices on any one of the multiple direct links include a first-party terminal device and a second-party terminal device.

The obtaining unit is specifically configured to separately send a first query frame and a second query frame, where the first query frame is used to instruct the first-party terminal device on the multiple direct links to send, after receiving the first query frame, a sounding result to the access point, and the second query frame is used to instruct the second-party terminal device on the multiple direct links to send, after receiving the second query frame, a sounding result to the access point; or
the obtaining unit is specifically configured to simultaneously send query frames to the both terminal devices on each of the multiple direct links, where the query frames are used to instruct the both terminal devices on each of the multiple direct links to simultaneously send, after receiving the query frames, sounding results to the access point; or
the direct link scheduling information further includes information about a reporting sequence of the multiple direct links.

The obtaining unit is specifically configured to send reporting triggering frames to the both terminal devices on each of the multiple direct links, where the reporting triggering frames are used to instruct the both terminal devices on each of the multiple direct links to sequentially send sounding results to the access point according to the information about the reporting sequence.

Further, preferably, in a case in which the obtaining unit is specifically configured to separately send the first query frame and the second query frame, the indication unit is specifically configured to instruct the both terminal devices on each of the multiple direct links to sequentially send sounding results to the access point by using a same sub-channel, and the both terminal devices on a different direct link to send sounding results to the access point by using a different sub-channel.

An access point in an embodiment of the present invention is described above. A terminal device in an embodiment of the present invention is described below. Referring to FIG. 16, a terminal device 900 in an embodiment of the present invention includes:
a receiving unit 901, configured to receive direct link scheduling information from an access point, where the direct link scheduling information includes information about multiple direct links participating in a next direct link scheduled period, and the direct link is a link that is set up by two terminal devices associated with the access point and that is used for direct communication;
a determining unit 902, configured to determine, according to the direct link scheduling information, whether to participate in the direct link scheduled period;
a sending unit 903, configured to: when it is determined to participate in the direct link scheduled period, send a sounding result to the access point in the direct link scheduled period, so that the access point allocates, according to the sounding result, a channel resource to a direct link on which the terminal device is located, where
the receiving unit 901 is further configured to receive information about the channel resource allocated by the access point to the direct link on which the terminal device is located; and
a communications unit 904, configured to communicate, by using the channel resource, with a terminal device on the other end of the direct link on which the terminal device is located, where
the sounding result includes information about a sub-channel available or unavailable for the terminal device, and a sub-channel in the channel resource does not include the sub-channel unavailable for the terminal device, or a sub-channel in the channel resource is selected from the sub-channel available for the terminal device; and/or
the sounding result includes information about an interfering terminal, the interfering terminal refers to a terminal device that interferes with the terminal device, and that is on another direct link of the multiple scheduled direct links except the direct link on which the terminal device is located, and sub-channels or transmission time in channel resources respectively allocated to the direct link on which the terminal device is located and the direct link on which the interfering terminal of the terminal device is located are or is different.

In this embodiment, both terminal devices on multiple direct links in a next direct link scheduled period send sounding results to the access point, so that an access point allocates channel resources to direct links and a terminal device on each direct link does not need to contend for a channel, which can avoid channel contention between different direct links and reduce a probability that a conflict occurs because of the channel contention, thereby improving channel use efficiency of multiple direct links. Moreover, the sounding result includes information about a sub-channel available or unavailable for the terminal device sending the sounding result, so that sub-channels in channel resources allocated by the access point to the terminal devices according to the sounding results do not include the sub-channels unavailable for the terminal devices, or sub-channels in channel resources allocated to the terminal devices are selected from the sub-channels available for the terminal devices; or the sounding result includes information about an interfering terminal, so that sub-channels or transmission time in channel resources allocated by the access point to the terminal devices and the interfering terminal of the terminal devices according to the sounding results are or is different. In this way, the direct links can be prevented from operating on a channel interfering with the direct links, or the direct links can be prevented from interfering with each other during data transmission, thereby improving channel utilization efficiency.

In this embodiment, the both terminal devices on any one of the multiple direct links include a first-party terminal device and a second-party terminal device.

Preferably, if the terminal device is a first-party terminal device on the direct link on which the terminal device is located, the sending unit 903 is specifically configured to send the sounding result at the same time when a first-party terminal device on another direct link of the multiple direct links except the direct link on which the terminal device is located sends a sounding result. If the terminal device is a second-party terminal device on the direct link on which the terminal device is located, the sending unit 903 is specifically configured to send the sounding result at the same time when a second-party terminal device on another direct link of the multiple direct links except the direct link on which the terminal device is located sends a sounding result. Further, preferably, the sending unit 903 and the terminal device on the other end of the direct link on which the terminal device is located further sequentially send sounding results to the access point according to an indication of the access point by using a same sub-channel, and the sending unit 903 and a terminal device on another direct link of the multiple direct links except the direct link on which the terminal device is located send sounding results to the access point by using different sub-channels.

Alternatively, the sending unit 903 is specifically configured to send the sounding result at the same time when the terminal device on the other end of the direct link on which the terminal device is located sends a sounding result.

Alternatively, the direct link scheduling information further includes information about a reporting sequence of the multiple direct links, and the sending unit 903 is specifically configured to send the sounding result to the access point according to the information about the reporting sequence.

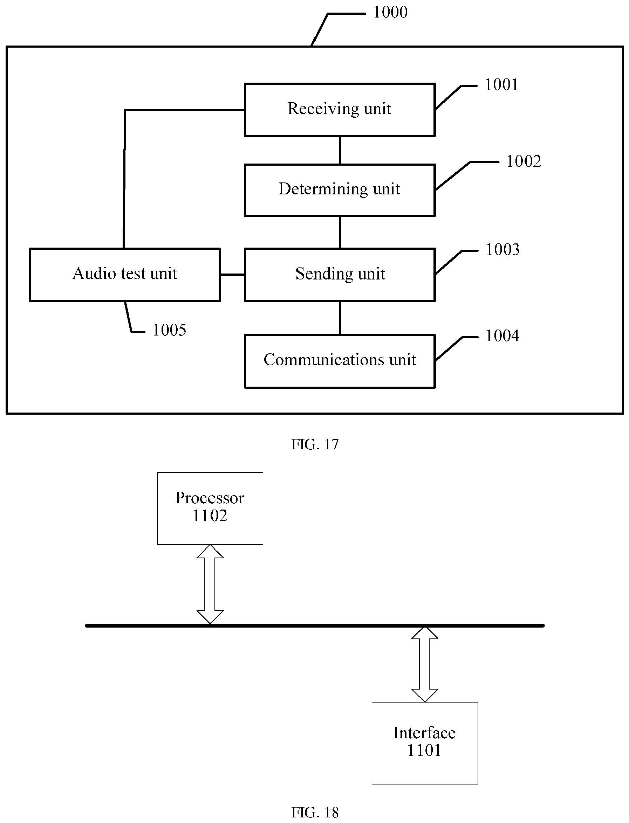

In the foregoing embodiment, a terminal device sends a sounding result to the AP. The sounding result may be a sounding result obtained by the terminal device that performs a sounding after the LSP begins. How a terminal device performs a sounding in an embodiment of the present invention is described below. Referring to FIG. 17, a terminal device 1000 in another embodiment of the present invention includes:
a receiving unit 1001, configured to receive direct link scheduling information from an access point, where the direct link scheduling information includes information about multiple direct links participating in a next direct link scheduled period, and the direct link is a link that is set up by two terminal devices associated with the access point and that is used for direct communication;
a determining unit 1002, configured to determine, according to the direct link scheduling information, whether to participate in the direct link scheduled period;
a sending unit 1003, configured to: when it is determined to participate in the direct link scheduled period, send a sounding result to the access point in the direct link scheduled period, so that the access point allocates, according to the sounding result, a channel resource to a direct link on which the terminal device is located, where
the receiving unit 1001 is further configured to receive information about the channel resource allocated by the access point to the direct link on which the terminal device is located; and
a communications unit 1004, configured to communicate, by using the channel resource, with a terminal device on the other end of the direct link on which the terminal device is located, where
the sounding result includes information about a sub-channel available or unavailable for the terminal device, and a sub-channel in the channel resource does not include the sub-channel unavailable for the terminal device, or a sub-channel in the channel resource is selected from the sub-channel available for the terminal device; and/or
the sounding result includes information about an interfering terminal, the interfering terminal refers to a terminal device that interferes with the terminal device, and that is on another direct link of the multiple scheduled direct links except the direct link on which the terminal device is located, and sub-channels or transmission time in channel resources respectively allocated to the direct link on which the terminal device is located and the direct link on which the interfering terminal of the terminal device is located are or is different.

In this embodiment, the terminal device 1000 further includes:
a sounding unit 1005, configured to: when it is determined to participate in the direct link scheduled period, perform a sounding operation according to an indication of the access point in the direct link scheduled period.

Preferably, the sounding unit 1005 is specifically configured to send a sounding frame according to the indication of the access point, so that another terminal device on the multiple direct links except the terminal device records whether the sounding frame is detected, and the sounding frame carries information used to uniquely indicate a sender; further configured to sense a sounding frame sent by the another terminal device on the multiple direct links; and further configured to record the sounding result, where the sounding result includes the information about the interfering terminal.

Further, preferably, the sounding frame is a null data packet.

The access point and the terminal device in the embodiments of the present invention are separately described above from the perspective of a unitized functional entity, and an access point and a terminal device in embodiments of the present invention are separately described below from the perspective of hardware processing.

Referring to FIG. 18, FIG. 18 is a schematic structural diagram of an access point according to the present invention.

In this embodiment, a specific form of the access point may be a public hotspot, a home gateway, a data card, a mobile phone, a server, a router, a gateway device, a firewall device or the like. The access point 1100 includes an interface 1101 and a processor 1102. The processor 1102 is connected to the interface 1101 by using a bus. In FIG. 11, a bold line is used to indicate the bus.

The interface 1101 is a wireless communications interface, and is particularly a wireless local area network interface, and may be implemented by using a wireless transceiver.

The processor 1102 may be one of or a combination of more than one of the following: a central processing unit (English: central processing unit, CPU for short), an application-specific integrated circuit (English: application-specific integrated circuit, ASIC for short), a field-programmable gate array (English: field-programmable gate array, FPGA for short), a complex programmable logic device (English: complex programmable logic device, CPLD for short) and a network processor (English: network processor, NP for short).

In a first scenario of this embodiment, the processor 1102 performs the following steps.

First, the processor 1102 multicasts or broadcasts direct link scheduling information by using the interface 1101, where the direct link scheduling information includes information about multiple direct links participating in a next direct link scheduled period, and the direct link is a link that is set up by two terminal devices associated with the access point and that is used for direct communication.

The processor 1102 receives, in the direct link scheduled period by using the interface 1101, sounding results sent by the both terminal devices on each of the multiple direct links, and the processor 1102 further separately allocates channel resources to the multiple direct links according to the sounding results in the direct link scheduled period.

The sounding result includes information about a sub-channel available or unavailable for the terminal device sending the sounding result, and sub-channels in channel resources allocated by the processor 1102 to the direct links on which the terminal devices sending the sounding results are located do not include the unavailable sub-channels, or a sub-channel in a channel resource allocated to the direct link on which the terminal device sending the sounding result is located is selected from the available sub-channel; and/or
the sounding result includes information about an interfering terminal, and the interfering terminal refers to a terminal device that interferes with the terminal device sending the sounding result, and that is on another direct link of the multiple scheduled direct links except the direct link on which the terminal device sending the sounding result is located, and sub-channels or transmission time in channel resources respectively allocated by the processor 1102 to the direct links on which the terminal devices sending the sounding results are located and the direct link on which the interfering terminal is located are or is different; and
the processor 1102 sends, by using the interface 1101, information about the allocated channel resource to the both terminal devices on each of the multiple direct links, so that the both terminal devices on each of the multiple direct links separately communicate with a peer party by using a channel resource allocated by the access point to the direct link.

Optionally, terminal devices on any two of the multiple direct links do not include a same terminal device.

Optionally, a link quantity of the multiple direct links is equal to a quantity of sub-channels included in an operating channel of the access point.

Optionally, the direct link scheduling information includes link identifiers of the multiple direct links, or includes link identifiers of the multiple direct links and a start time of the direct link scheduled period.

Optionally, before the processor 1102 receives, in the direct link scheduled period by using the interface 1101, the sounding results sent by the both terminal devices on each of the multiple direct links, the processor 1102 further sends an indication by using the interface 1101, where the indication is used to instruct the both terminal devices on each of the multiple direct links to sequentially perform a sounding operation.

Specifically, the processor 1102 sequentially sends a polling frame to the both terminal devices on each of the multiple direct links by using the interface 1101, where the polling frame is used to instruct a terminal device receiving the polling frame to send a sounding frame, so that another terminal device on the multiple direct links except the terminal device sending the sounding frame records whether the sounding frame is detected, and the sounding frame carries information used to uniquely indicate a sender.

Optionally, the polling frame is a null data packet.

Optionally, the direct link scheduling information further includes information about a sounding sequence of the both terminal devices on each of the multiple direct links. The processor 1102 sends a sounding triggering frame by using the interface 1101, where the sounding triggering frame is used to instruct the both terminal devices on each of the multiple direct links to sequentially send a sounding frame according to the sounding sequence, so that another terminal device on the multiple direct links except the terminal device sending the sounding frame records whether the sounding frame is detected, and the sounding frame carries information used to uniquely indicate a sender.

Optionally, the processor 1102 multicasts or broadcasts a schedule frame by using the interface 1101, where the schedule frame carries the direct link scheduling information; and the direct link scheduling information further includes information about a sounding sequence of the both terminal devices on each of the multiple direct links. The schedule frame is further used to instruct the both terminal devices on each of the multiple direct links to sequentially send a sounding frame according to the sounding sequence, so that another terminal device on the multiple direct links except the terminal device sending the sounding frame records whether the sounding frame is detected, and the sounding frame carries information used to uniquely indicate a sender.

Optionally, the both terminal devices on any one of the multiple direct links include a first-party terminal device and a second-party terminal device.

The processor 1102 separately sends a first query frame and a second query frame by using the interface 1101, where the first query frame is used to instruct the first-party terminal device on the multiple direct links to send, after receiving the first query frame, a sounding result to the access point, and the second query frame is used to instruct the second-party terminal device on the multiple direct links to send, after receiving the second query frame, a sounding result to the access point; or
the processor 1102 simultaneously sends query frames to the both terminal devices on each of the multiple direct links by using the interface 1101, where the query frames are used to instruct the both terminal devices on each of the multiple direct links to simultaneously send, after receiving the query frames, sounding results to the access point; or
the direct link scheduling information further includes information about a reporting sequence of the multiple direct links, and the processor 1102 sends reporting triggering frames to the both terminal devices on each of the multiple direct links by using the interface 1101, where the reporting triggering frames are used to instruct the both terminal devices on each of the multiple direct links to sequentially send sounding results to the access point according to the information about the reporting sequence.

Optionally, in a case in which the access point separately sends the first query frame and the second query frame, the processor 1102 sends an indication by using the interface 1101, where the indication is used to instruct the both terminal devices on each of the multiple direct links to sequentially send sounding results to the access point by using a same sub-channel, and the both terminal devices on a different direct link to send sounding results to the access point by using a different sub-channel.

An access point in an embodiment of the present invention is described above. A terminal device in an embodiment of the present invention is described below.

As shown in FIG. 18, FIG. 18 is a schematic structural diagram of a terminal device according to the present invention.

In this embodiment, a specific form of the terminal device may be a mobile phone, a tablet computer, a computer, a wireless network adapter, a digital set-top box, a wireless printer or the like. The terminal device 1100 includes an interface 1101 and a processor 1102. The processor 1102 is connected to the interface 1101 by using a bus. In FIG. 11, a bold line is used to indicate the bus.

The processor 1102 may be one of or a combination of more than one of the following: a CPU, an ASIC, an FPGA, a CPLD, and an NP.

In a first scenario of this embodiment, the processor 1102 performs the following steps.

First, the processor 1102 receives, by using the interface 1101, direct link scheduling information from an access point, where the direct link scheduling information includes information about multiple direct links participating in a next direct link scheduled period, and the direct link is a link that is set up by two terminal devices associated with the access point and that is used for direct communication; and
the processor 1102 is further configured to determine, according to the direct link scheduling information, whether to participate in the direct link scheduled period; and if yes, send a sounding result to the access point in the direct link scheduled period by using the interface 1101, so that the access point allocates, according to the sounding result, a channel resource to a direct link on which the terminal device is located.

The processor 1102 further receives, by using the interface 1101, information about the channel resource allocated by the access point to the direct link on which the terminal device is located; and
the processor 1102 further communicates, by using the channel resource, with a terminal device on the other end of the direct link on which the terminal device is located, where
the sounding result includes information about a sub-channel available or unavailable for the terminal device, and a sub-channel in the channel resource does not include the sub-channel unavailable for the terminal device, or a sub-channel in the channel resource is selected from the sub-channel available for the terminal device; and/or
the sounding result includes information about an interfering terminal, the interfering terminal refers to a terminal device that interferes with the terminal device, and that is on another direct link of the multiple scheduled direct links except the direct link on which the terminal device is located, and sub-channels or transmission time in channel resources respectively allocated to the direct link on which the terminal device is located and the direct link on which the interfering terminal of the terminal device is located are or is different.

Optionally, the processor 1102 is further configured to: when it is determined to participate in the direct link scheduled period, perform a sounding operation according to an indication of the access point in the direct link scheduled period.

Specifically, the processor 1102 sends a sounding frame according to the indication of the access point by using the interface 1101, so that another terminal device on the multiple direct links except the terminal device records whether the sounding frame is detected, and the sounding frame carries information used to uniquely indicate a sender. The processor 1102 is further configured to sense a sounding frame sent by the another terminal device on the multiple direct links; and further configured to record the sounding result, where the sounding result includes the information about the interfering terminal.

Optionally, the sounding frame is a null data packet.

Optionally, the both terminal devices on any one of the multiple direct links include a first-party terminal device and a second-party terminal device; and
if the terminal device is a first-party terminal device on the direct link on which the terminal device is located, the processor 1102 sends, by using the interface 1101, the sounding result at the same time when a first-party terminal device on another direct link of the multiple direct links except the direct link on which the terminal device is located sends a sounding result;
if the terminal device is a second-party terminal device on the direct link on which the terminal device is located, the processor 1102 sends, by using the interface 1101, the sounding result at the same time when a second-party terminal device on another direct link of the multiple direct links except the direct link on which the terminal device is located sends a sounding result; or
the processor 1102 sends, by using the interface 1101, the sounding result at the same time when the terminal device on the other end of the direct link on which the terminal device is located sends a sounding result; or
the direct link scheduling information further includes information about a reporting sequence of the multiple direct links, and the processor 1102 sends the sounding result to the access point according to the information about the reporting sequence by using the interface 1101.

Optionally, the both terminal devices on any one of the multiple direct links include a first-party terminal device and a second-party terminal device.

If the terminal device is a first-party terminal device on the direct link on which the terminal device is located, the processor 1102 sends, by using the interface 1101, the sounding result at the same time when a first-party terminal device on another direct link of the multiple direct links except the direct link on which the terminal device is located sends a sounding result;
if the terminal device is a second-party terminal device on the direct link on which the terminal device is located, the processor 1102 sends, by using the interface 1101, the sounding result at the same time when a second-party terminal device on another direct link of the multiple direct links except the direct link on which the terminal device is located sends a sounding result; or
the processor 1102 and the terminal device on the other end of the direct link on which the terminal device is located further sequentially send, by using the interface 1101, sounding results to the access point according to an indication of the access point by using a same sub-channel, and the processor 1102 and a terminal device on another direct link of the multiple direct links except the direct link on which the terminal device is located send sounding results to the access point by using different sub-channels.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

Other names may be used as names of the frames used in the embodiments of the present invention, as long as frames with the other names have the same roles or functions as those of the frames used in the embodiments of the present invention.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A direct link scheduling method, comprising:
multicasting or broadcasting, by an access point, direct link scheduling information, wherein the direct link scheduling information comprises information about multiple direct links participating in a next direct link scheduled period, and each of the multiple direct links is a link that is set up by two terminal devices associated with the access point and that is used for direct communication (step 101, step 201, step 301, step 401);
obtaining, by the access point in the direct link scheduled period, sounding results sent by the both terminal devices on each of the multiple direct links; and separately allocating, by the access point, channel resources to the multiple direct links according to the sounding results in the direct link scheduled period (step 102, step 202, step 303, step 402), wherein
the sounding result comprises information about an available sub-channel or an unavailable sub-channel for the terminal device sending the sounding result, and wherein a sub-channel in a channel resource allocated by the access point to the direct link on which the terminal device sending the sounding result is located does not comprise the unavailable sub-channel, or is selected from the available sub-channel; and/or
the sounding result comprises information about an interfering terminal, and the interfering terminal refers to a terminal device that interferes with the terminal device sending the sounding result, and that is on another direct link of the multiple scheduled direct links except the direct link on which the terminal device sending the sounding result is located, and sub-channels or transmission time in channel resources respectively allocated by the access point to the direct link on which the terminal device sending the sounding result is located and the direct link on which the interfering terminal is located are or is different; and
sending, by the access point, information about the allocated channel resource to the both terminal devices on each of the multiple direct links (step 103, step 203, step 304, step 403).

2. The direct link scheduling method according to claim 1, wherein the direct link scheduling information comprises link identifiers of the multiple direct links, or comprises link identifiers of the multiple direct links and a start time of the direct link scheduled period.

3. The direct link scheduling method according to claim 1 or 2, wherein before the obtaining, by the access point in the direct link scheduled period, sounding results sent by the both terminal devices on each of the multiple direct links, the method further comprises:
instructing, by the access point, the both terminal devices on each of the multiple direct links to sequentially perform a sounding operation.

4. The direct link scheduling method according to claim 3, wherein the instructing, by the access point, the both terminal devices on each of the multiple direct links to sequentially perform a sounding operation specifically comprises:
sequentially sending, by the access point, a polling frame to the both terminal devices on each of the multiple direct links, wherein the polling frame is used to instruct a terminal device receiving the polling frame to send a sounding frame, and the sounding frame carries information used to uniquely indicate a sender.

5. The direct link scheduling method according to claim 4, wherein the polling frame is a null data packet.

6. The direct link scheduling method according to claim 3, wherein the direct link scheduling information further comprises information about a sounding sequence of the both terminal devices on each of the multiple direct links, and
the instructing, by the access point, the both terminal devices on each of the multiple direct links to sequentially perform the sounding operation specifically comprises:
sending, by the access point, a sounding triggering frame, wherein the sounding triggering frame is used to instruct the both terminal devices on each of the multiple direct links to sequentially send a sounding frame according to the sounding sequence, and the sounding frame carries information used to uniquely indicate a sender.

7. The direct link scheduling method according to claim 3, wherein the multicasting or broadcasting, by the access point, direct link scheduling information specifically comprises:
multicasting or broadcasting, by the access point, a schedule frame, wherein the schedule frame carries the direct link scheduling information; and
the direct link scheduling information further comprises information about a sounding sequence of the both terminal devices on each of the multiple direct links, and
the instructing, by the access point, the both terminal devices on each of the multiple direct links to sequentially perform the sounding operation is specifically:
the schedule frame is used to instruct the both terminal devices on each of the multiple direct links to sequentially send a sounding frame according to the sounding sequence, and the sounding frame carries information used to uniquely indicate a sender.

8. The direct link scheduling method according to any one of claims 1 to 7, wherein the both terminal devices on any one of the multiple direct links comprise a first-party terminal device and a second-party terminal device; and
the obtaining, by the access point, sounding results sent by the both terminal devices on each of the multiple direct links specifically comprises:
separately sending, by the access point, a first query frame and a second query frame, wherein the first query frame is used to instruct the first-party terminal device on the multiple direct links to send, after receiving the first query frame, a sounding result to the access point, and the second query frame is used to instruct the second-party terminal device on the multiple direct links to send, after receiving the second query frame, a sounding result to the access point; or
simultaneously sending, by the access point, query frames to the both terminal devices on each of the multiple direct links, wherein the query frames are used to instruct the both terminal devices on each of the multiple direct links to simultaneously send, after receiving the query frames, sounding results to the access point; or
the direct link scheduling information further comprises information about a reporting sequence of the multiple direct links, and the obtaining, by the access point, sounding results sent by the both terminal devices on each of the multiple direct links specifically comprises:
sending, by the access point, reporting triggering frames to the both terminal devices on each of the multiple direct links, wherein the reporting triggering frames are used to instruct the both terminal devices on each of the multiple direct links to sequentially send sounding results to the access point according to the information about the reporting sequence.

9. The direct link scheduling method according to claim 8, wherein in a case in which the access point separately sends the first query frame and the second query frame, the method further comprises:
further instructing, by the access point, the both terminal devices on each of the multiple direct links to sequentially send sounding results to the access point by using a same sub-channel, and the both terminal devices on a different direct link to send sounding results to the access point by using a different sub-channel.

10. A direct link scheduling method, comprising:
receiving, by a terminal device, direct link scheduling information from an access point, wherein the direct link scheduling information comprises information about multiple direct links participating in a next direct link scheduled period, and each of the multiple direct links is a link that is set up by two terminal devices associated with the access point and that is used for direct communication (step 501, step 601);
determining, by the terminal device according to the direct link scheduling information, whether to participate in the direct link scheduled period (step 502, step 602); and
if yes, performing, by the terminal device, the following steps.
sending, by the terminal device, a sounding result to the access point in the direct link scheduled period (step 503, step 604), ;
receiving, by the terminal device, information about the channel resource allocated by the access point to the direct link on which the terminal device is located (step 504, step 605); and
communicating, by the terminal device by using the channel resource, with a terminal device on the other end of the direct link on which the terminal device is located (step 505, step 606), wherein
the sounding result comprises information about an available sub-channel or an unavailable sub-channel for the terminal device, and wherein a sub-channel in the channel resource does not comprise the sub-channel unavailable for the terminal device, or is selected from the sub-channel available for the terminal device; and/or
the sounding result comprises information about an interfering terminal, the interfering terminal refers to a terminal device that interferes with the terminal device, and that is on another direct link of the multiple scheduled direct links except the direct link on which the terminal device is located, and sub-channels or transmission time in channel resources respectively allocated to the direct link on which the terminal device is located and the direct link on which the interfering terminal of the terminal device is located are or is different.

11. The direct link scheduling method according to claim 10, wherein if yes, the terminal device further performs the following step:
performing, by the terminal device, a sounding operation according to an indication of the access point in the direct link scheduled period.

12. The direct link scheduling method according to claim 11, wherein the performing, by the terminal device, the sounding operation according to the indication of the access point specifically comprises:
sending, by the terminal device, a sounding frame according to the indication of the access point , and the sounding frame carries information used to uniquely indicate a sender;
sensing, by the terminal device, a sounding frame sent by a another terminal device on the multiple direct links except the terminal device; and
recording, by the terminal device, the sounding result, wherein the sounding result comprises the information about the interfering terminal.

13. The direct link scheduling method according to claim 10, wherein the both terminal devices on any one of the multiple direct links comprise a first-party terminal device and a second-party terminal device; and
the sending, by the terminal device, the sounding result to the access point specifically comprises:
if the terminal device is a first-party terminal device on the direct link on which the terminal device is located, sending, by the terminal device, the sounding result at the same time when a first-party terminal device on another direct link of the multiple direct links except the direct link on which the terminal device is located sends a sounding result;
if the terminal device is a second-party terminal device on the direct link on which the terminal device is located, sending, by the terminal device, the sounding result at the same time when a second-party terminal device on another direct link of the multiple direct links except the direct link on which the terminal device is located sends a sounding result; or
sending, by the terminal device, the sounding result at the same time when the terminal device on the other end of the direct link on which the terminal device is located sends a sounding result; or
the direct link scheduling information further comprises information about a reporting sequence of the multiple direct links, and
sending, by the terminal device, the sounding result to the access point according to the information about the reporting sequence.

14. An access point (700, 800) configured and intended to perform any of the methods according to claims 1 - 9.

15. A terminal device (900, 100) configured and intended to perform any of the methods according to claims 10 - 13.

## Patentansprüche

1. Verfahren zur Zeitplanung einer direkten Verbindung, das Folgendes umfasst:
Multicasting oder Broadcasting, durch einen Zugangspunkt, von Informationen zur Zeitplanung einer direkten Verbindung, wobei die Informationen zur Zeitplanung einer direkten Verbindung Informationen über mehrere direkte Verbindungen umfassen, die an einer nächsten zeitgeplanten Periode für direkte Verbindung teilnehmen, und wobei jede der direkten Verbindungen eine Verbindung ist, die durch zwei Endgerätevorrichtungen eingerichtet wird, die mit dem Zugangspunkt verknüpft sind, und die für direkte Kommunikation verwendet wird (Schritt 101, Schritt 201, Schritt 301, Schritt 401);
Abrufen, durch den Zugangspunkt in der zeitgeplanten Periode für direkte Verbindung, von Sondierungsergebnissen, die von den beiden Endgerätevorrichtungen auf jeder der mehreren direkten Verbindungen gesendet wurden, und separates Zuordnen, durch den Zugangspunkt, von Kanalressourcen zu den mehreren direkten Verbindungen gemäß den Sondierungsergebnissen in der zeitgeplanten Periode für direkte Verbindung (Schritt 102, Schritt 202, Schritt 303, Schritt 402), wobei
das Sondierungsergebnis Informationen über einen verfügbaren Unterkanal oder einen nicht verfügbaren Unterkanal für die Endgerätevorrichtung umfasst, die das Sondierungsergebnis sendet, und wobei ein Unterkanal in einer Kanalressource, die durch den Zugangspunkt zu der direkten Verbindung zugeordnet wird, auf der sich die Endgerätevorrichtung befindet, die das Sondierungsergebnis sendet, nicht den nicht verfügbaren Unterkanal umfasst oder aus dem verfügbaren Unterkanal ausgewählt wird, und/oder
das Sondierungsergebnis Informationen über ein interferierendes Endgerät umfasst, und sich das interferierende Endgerät auf eine Endgerätevorrichtung bezieht, die mit der Endgerätevorrichtung interferiert, die das Sondierungsergebnis sendet, und die auf einer anderen direkten Verbindung der mehreren zeitgeplanten direkten Verbindungen ist, ausgenommen die direkte Verbindung, auf der sich die Endgerätevorrichtung befindet, die das Sondierungsergebnis sendet, und Unterkanäle oder Übertragungszeit in Kanalressourcen, die von dem Zugangspunkt zu der direkten Verbindung, auf der sich die Endgerätevorrichtung befindet, die das Sondierungsergebnis sendet, bzw. der direkten Verbindung, auf der sich das interferierende Endgerät befindet, zugeordnet werden bzw. wird, unterschiedlich sind bzw. ist; und
Senden, durch den Zugangspunkt, von Informationen über die zugeordnete Kanalressource an die beiden Endgerätevorrichtungen auf jeder der mehreren direkten Verbindungen (Schritt 103, Schritt 203, Schritt 304, Schritt 403).

2. Verfahren zur Zeitplanung einer direkten Verbindung nach Anspruch 1, wobei die Informationen zur Zeitplanung einer direkten Verbindung Verbindungskennungen der mehreren direkten Verbindungen umfassen oder Verbindungskennungen der mehreren direkten Verbindungen und eine Startzeit der zeitgeplanten Periode für direkte Verbindung umfassen.

3. Verfahren zur Zeitplanung einer direkten Verbindung nach Anspruch 1 oder 2, wobei vor dem Abrufen, durch den Zugangspunkt in der zeitgeplanten Periode für direkte Verbindung, von Sondierungsergebnissen, die durch die beiden Endgerätevorrichtungen auf jeder der mehreren direkten Verbindungen gesendet werden, das Verfahren ferner Folgendes umfasst:
Anweisen, durch den Zugangspunkt, der beiden Endgerätevorrichtungen auf jeder der mehreren direkten Verbindungen, sequenziell eine Sondierungsoperation durchzuführen.

4. Verfahren zur Zeitplanung einer direkten Verbindung nach Anspruch 3, wobei das Anweisen, durch den Zugangspunkt, der beiden Endgerätevorrichtungen auf jeder der mehreren direkten Verbindungen, sequenziell eine Sondierungsoperation durchzuführen, speziell Folgendes umfasst:
sequenzielles Senden, durch den Zugangspunkt, eines Abfragerahmens an die beiden Endgerätevorrichtungen auf jeder der mehreren direkten Verbindungen, wobei der Abfragerahmen verwendet wird, um eine Endgerätevorrichtung, die den Abfragerahmen empfängt, anzuweisen, einen Sondierungsrahmen zu senden, und der Sondierungsrahmen Informationen trägt, die verwendet werden, um einen Sender eindeutig anzuzeigen.

5. Verfahren zur Zeitplanung einer direkten Verbindung nach Anspruch 4, wobei der Abfragerahmen ein Nulldatenpaket ist.

6. Verfahren zur Zeitplanung einer direkten Verbindung nach Anspruch 3, wobei die Informationen zur Zeitplanung einer direkten Verbindung ferner Informationen über eine Sondierungssequenz der beiden Endgerätevorrichtungen auf jeder der mehreren direkten Verbindungen umfassen, und
das Anweisen, durch den Zugangspunkt, der beiden Endgerätevorrichtungen auf jeder der mehreren direkten Verbindungen, sequenziell eine Sondierungsoperation durchzuführen, speziell Folgendes umfasst:
Senden, duch den Zugangspunkt, eines Sondierungsauslöserahmens, wobei der Sondierungsauslöserahmen verwendet wird, um die beiden Endgerätevorrichtungen auf jeder der mehreren direkten Verbindungen anzuweisen, sequenziell einen Sondierungsrahmen gemäß der Sondierungssequenz zu senden, und der Sondierungsrahmen Informationen trägt, die verwendet werden, um einen Sender eindeutig anzuzeigen.

7. Verfahren zur Zeitplanung einer direkten Verbindung nach Anspruch 3, wobei das Multicasting oder Broadcasting, durch den Zugangspunkt, von Informationen zur Zeitplanung einer direkten Verbindung speziell Folgendes umfasst:
Multicasting oder Broadcasting, durch den Zugangspunkt, eines Zeitplanungsrahmens, wobei der Zeitplanungsrahmen die Informationen zur Zeitplanung einer direkten Verbindung trägt; und
die Informationen zur Zeitplanung einer direkten Verbindung umfassen ferner Informationen über eine Sondierungssequenz der beiden Endgerätevorrichtungen auf jeder der mehreren direkten Verbindungen, und
das Anweisen, durch den Zugangspunkt, der beiden Endgerätevorrichtungen auf jeder der mehreren direkten Verbindungen, sequenziell eine Sondierungsoperation durchzuführen, ist speziell:
der Zeitplanungsrahmen wird verwendet, um die beiden Endgerätevorrichtungen auf jeder der mehreren direkten Verbindungen anzuweisen, sequenziell einen Sondierungsrahmen gemäß der Sondierungssequenz zu senden, und der Sondierungsrahmen trägt Informationen, die verwendet werden, um einen Sender eindeutig anzuzeigen.

8. Verfahren zur Zeitplanung einer direkten Verbindung nach einem der Ansprüche 1 bis 7, wobei die beiden Endgerätevorrichtungen auf einer der mehreren direkten Verbindungen eine Endgerätevorrichtung von einer ersten Seite und eine Endgerätevorrichtung von einer zweiten Seite umfassen; und
das Abrufen, durch den Zugangspunkt, von Sondierungsergebnissen, die durch die beiden Endgerätevorrichtungen auf jeder der mehreren direkten Verbindungen gesendet werden, speziell Folgendes umfasst:
separates Senden, durch den Zugangspunkt, eines ersten Abfragerahmens und eines zweiten Abfragerahmens, wobei der erste Abfragerahmen verwendet wird, um die Endgerätevorrichtung von der ersten Seite auf den mehreren direkten Verbindungen anzuweisen, nach Empfangen des ersten Abfragerahmens, ein Sondierungsergebnis an den Zugangspunkt zu senden, und wobei der zweite Abfragerahmen verwendet wird, um die Endgerätevorrichtung von der zweiten Seite auf den mehreren direkten Verbindungen anzuweisen, nach Empfangen des zweiten Abfragerahmens, ein Sondierungsergebnis an den Zugangspunkt zu senden; oder
gleichzeitiges Senden, durch den Zugangspunkt, von Abfragerahmen an die beiden Endgerätevorrichtungen auf jeder der mehreren direkten Verbindungen, wobei die Abfragerahmen verwendet werden, um die beiden Endgerätevorrichtungen auf jeder der mehreren direkten Verbindungen anzuweisen, nach Empfangen der Abfragerahmen, gleichzeitig Sondierungsergebnisse an den Zugangspunkt zu senden; oder
wobei die Informationen zur Zeitplanung einer direkten Verbindung ferner Informationen über eine Meldesequenz der mehreren direkten Verbindungen umfassen, und das Abrufen, durch den Zugangspunkt, von Sondierungsergebnissen, die durch die beiden Endgerätevorrichtungen auf jeder der mehreren direkten Verbindungen gesendet werden, speziell Folgendes umfasst:
Senden, durch den Zugangspunkt, von Meldeauslöserahmen an die beiden Endgerätevorrichtungen auf jeder der mehreren direkten Verbindungen, wobei die Meldeauslöserahmen verwendet werden, um die beiden Endgerätevorrichtungen auf jeder der mehreren direkten Verbindungen anzuweisen, gemäß den Informationen über die Meldesequenz sequenziell Sondierungsergebnisse an den Zugangspunkt zu senden.

9. Verfahren zur Zeitplanung einer direkten Verbindung nach Anspruch 8, wobei in einem Fall, bei dem der Zugangspunkt den ersten Abfragerahmen und den zweiten Abfragerahmen separat sendet, das Verfahren ferner Folgendes umfasst:
weiteres Anweisen, durch den Zugangspunkt, der beiden Endgerätevorrichtungen auf jeder der mehreren direkten Verbindungen, sequenziell Sondierungsergebnisse unter Verwendung eines gleichen Unterkanals an den Zugangspunkt zu senden, und der beiden Endgerätevorrichtungen auf einer unterschiedlichen direkten Verbindung, Sondierungsergebnisse unter Verwendung eines unterschiedlichen Unterkanals an den Zugangspunkt zu senden.

10. Verfahren zur Zeitplanung einer direkten Verbindung, das Folgendes umfasst:
Empfangen, durch eine Endgerätevorrichtung, von Informationen zur Zeitplanung einer direkten Verbindung von einem Zugangspunkt, wobei die Informationen zur Zeitplanung einer direkten Verbindung Informationen über mehrere direkte Verbindungen umfassen, die an einer nächsten zeitgeplanten Periode für direkte Verbindung teilnehmen, und wobei jede der direkten Verbindungen eine Verbindung ist, die durch zwei Endgerätevorrichtungen eingerichtet wird, die mit dem Zugangspunkt verknüpft sind, und die für direkte Kommunikation verwendet wird (Schritt 501, Schritt 601);
Bestimmen, durch die Endgerätevorrichtung gemäß den Informationen zur Zeitplanung einer direkten Verbindung, ob an der zeitgeplanten Periode für direkte Verbindung teilgenommen wird (Schritt 502, Schritt 602); und
wenn das der Fall ist, Durchführen, durch die Endgerätevorrichtung, der folgenden Schritte:
Senden, durch die Endgerätevorrichtung, eines Sondierungsergebnisses an den Zugangspunkt in der zeitgeplanten Periode für direkte Verbindung (Schritt 503, Schritt 604);
Empfangen, durch die Endgerätevorrichtung, von Informationen über die Kanalressource, die durch den Zugangspunkt zu der direkten Verbindung zugeordnet wurde, auf der sich die Endgerätevorrichtung befindet (Schritt 504, Schritt 605); und
Kommunizieren, durch die Endgerätevorrichtung unter Verwendung der Kanalressource, mit einer Endgerätevorrichtung an dem anderen Ende der direkten Verbindung, auf der sich die Endgerätevorrichtung befindet (Schritt 505, Schritt 606), wobei
das Sondierungsergebnis Informationen über einen verfügbaren Unterkanal oder einen nicht verfügbaren Unterkanal für die Endgerätevorrichtung umfasst, und wobei ein Unterkanal in der Kanalressource nicht den für die Endgerätevorrichtung nicht verfügbaren Unterkanal umfasst oder auf dem für die Endgerätevorrichtung verfügbaren Unterkanal ausgewählt wird; und/oder
das Sondierungsergebnis Informationen über ein interferierendes Endgerät umfasst, und sich das interferierende Endgerät auf eine Endgerätevorrichtung bezieht, die mit der Endgerätevorrichtung interferiert, und die auf einer anderen direkten Verbindung der mehreren zeitgeplanten direkten Verbindungen ist, ausgenommen die direkte Verbindung, auf der sich die Endgerätevorrichtung befindet, und Unterkanäle oder Übertragungszeit in Kanalressourcen, die zu der direkten Verbindung, auf der sich die Endgerätevorrichtung befindet, bzw. der direkten Verbindung, auf der sich das interferierende Endgerät der Endgerätevorrichtung befindet, zugeordnet werden bzw. wird, unterschiedlich sind bzw. ist.

11. Verfahren zur Zeitplanung einer direkten Verbindung nach Anspruch 10, wobei, wenn dies der Fall ist, die Endgerätevorrichtung ferner den folgenden Schritt durchführt:
Durchführen, durch die Endgerätevorrichtung, einer Sondierungsoperation gemäß einer Anzeige des Zugangspunkts in der zeitgeplanten Periode für direkte Verbindung.

12. Verfahren zur Zeitplanung einer direkten Verbindung nach Anspruch 11, wobei das Durchführen, durch die Endgerätevorrichtung, der Sondierungsoperation gemäß der Anzeige des Zugangspunkts speziell Folgendes umfasst:
Senden, durch die Endgerätevorrichtung, eines Sondierungsrahmens gemäß der Anzeige des Zugangspunkts, und der Sondierungsrahmen trägt Informationen, die verwendet werden, um einen Sender eindeutig anzuzeigen;
Erfassen, durch die Endgerätevorrichtung, eines Sondierungsrahmens, gesendet von einer anderen Endgerätevorrichtung auf den mehreren direkten Verbindungen, ausgenommen die Endgerätevorrichtung; und
Aufzeichnen, durch die Endgerätevorrichtung, des Sondierungsergebnisses, wobei das Sondierungsergebnis die Informationen über das interferierende Endgerät umfasst.

13. Verfahren zur Zeitplanung einer direkten Verbindung nach Anspruch 10, wobei die beiden Endgerätevorrichtungen auf einer der mehreren direkten Verbindungen eine Endgerätevorrichtung von einer ersten Seite und eine Endgerätevorrichtung von einer zweiten Seite umfassen; und
das Senden, durch die Endgerätevorrichtung, des Sondierungsergebnisses an den Zugangspunkt, speziell Folgendes umfasst:
wenn die Endgerätevorrichtung eine Endgerätevorrichtung von einer ersten Seite auf der direkten Verbindung ist, auf der sich die Endgerätevorrichtung befindet, Senden, durch die Endgerätevorrichtung, des Sondierungsergebnisses zur gleichen Zeit, wenn eine Endgerätevorrichtung von einer ersten Seite auf einer anderen direkten Verbindung der mehreren direkten Verbindungen, ausgenommen die direkte Verbindung, auf der sich die Endgerätevorrichtung befindet, ein Sondierungsergebnis sendet;
wenn die Endgerätevorrichtung eine Endgerätevorrichtung von einer zweiten Seite auf der direkten Verbindung ist, auf der sich die Endgerätevorrichtung befindet, Senden, durch die Endgerätevorrichtung, des Sondierungsergebnisses zur gleichen Zeit, wenn eine Endgerätevorrichtung von einer zweiten Seite auf einer anderen direkten Verbindung der mehreren direkten Verbindungen, ausgenommen die direkte Verbindung, auf der sich die Endgerätevorrichtung befindet, ein Sondierungsergebnis sendet; oder
Senden, durch die Endgerätevorrichtung, des Sondierungsergebnisses zur gleichen Zeit, wenn die Endgerätevorrichtung am anderen Ende der direkten Verbindung, auf der sich die Endgerätevorrichtung befindet, ein Sondierungsergebnis sendet; oder
die Informationen zur Zeitplanung einer direkten Verbindung umfassen ferner Informationen über eine Meldesequenz der mehreren direkten Verbindungen, und
Senden, durch die Endgerätevorrichtung, des Sondierungsergebnisses an den Zugangspunkt gemäß den Informationen über die Meldesequenz.

14. Zugangspunkt (700, 800), ausgelegt und gedacht zum Durchführen eines der Verfahren nach den Ansprüchen 1 - 9.

15. Endgerätevorrichtung (900, 100), ausgelegt und gedacht zum Durchführen eines der Verfahren nach den Ansprüchen 10 - 13.

## Revendications

1. Procédé de programmation de liaisons directes, comprenant de :
multidiffuser ou diffuser, par un point d'accès, des informations de programmation de liaisons directes, dans lequel les informations de programmation de liaisons directes comprennent des informations sur de multiples liaisons directes participant à une période programmée de liaisons directes suivante, et chacune des multiples liaisons directes est une liaison qui est établie par deux dispositifs terminaux associés au point d'accès et qui est utilisée pour la communication directe (étape 101, étape 201, étape 301, étape 401) ;
obtenir, par le point d'accès dans la période programmée de liaisons directes, des résultats de sondage envoyés par les deux dispositifs terminaux sur chacune des multiples liaisons directes ; et allouer séparément, par le point d'accès, des ressources de canal aux multiples liaisons directes en fonction des résultats de sondage dans la période programmée de liaisons directes (étape 102, étape 202, étape 303, étape 402), dans lequel
le résultat de sondage comprend des informations sur un sous-canal disponible ou un sous-canal indisponible pour le dispositif terminal envoyant le résultat de sondage, et dans lequel un sous-canal dans une ressource de canal allouée par le point d'accès à la liaison directe sur laquelle se trouve le dispositif terminal envoyant le résultat de sondage ne comprend pas le sous-canal indisponible ou est sélectionné parmi les sous-canaux disponibles, et/ou
le résultat de sondage comprend des informations sur un terminal brouilleur, et le terminal brouilleur fait référence à un dispositif terminal qui brouille le dispositif terminal envoyant le résultat de sondage, et qui se trouve sur une autre liaison directe des multiples liaisons directes programmées, à l'exception de la liaison directe sur laquelle se trouve le dispositif terminal envoyant le résultat de sondage, et des sous-canaux ou le temps de transmission dans les ressources de canal allouées respectivement par le point d'accès à la liaison directe sur laquelle se trouve le dispositif terminal envoyant le résultat de sondage et à la liaison directe sur laquelle se trouve le terminal brouilleur est ou sont différents ; et
envoyer, par le point d'accès, des informations sur la ressource de canal allouée aux deux dispositifs terminaux sur chacune des multiples liaisons directes (étape 103, étape 203, étape 304, étape 403).

2. Procédé de programmation de liaisons directes selon la revendication 1, dans lequel les informations de programmation de liaisons directes comprennent des identificateurs de liaisons des multiples liaisons directes, ou comprennent des identificateurs de liaisons des multiples liaisons directes et un temps de début de la période programmée de liaisons directes.

3. Procédé de programmation de liaisons directes selon la revendication 1 ou 2, dans lequel, avant d'obtenir, par le point d'accès dans la période programmée de liaisons directes, des résultats de sondage envoyés par les deux dispositifs terminaux sur chacune des multiples liaisons directes, le procédé comprend en outre de :
donner l'instruction, par le point d'accès, aux deux dispositifs terminaux sur chacune des multiples liaisons directes d'effectuer séquentiellement une opération de sondage.

4. Procédé de programmation de liaisons directes selon la revendication 3, dans lequel l'instruction, par le point d'accès, aux deux dispositifs terminaux sur chacune des multiples liaisons directes d'effectuer séquentiellement une opération de sondage comprend spécifiquement de :
envoyer séquentiellement, par le point d'accès, une trame d'interrogation aux deux dispositifs terminaux sur chacune des multiples liaisons directes, dans lequel la trame d'interrogation est utilisée pour donner l'instruction à un dispositif terminal recevant la trame d'interrogation d'envoyer une trame de sondage, et la trame de sondage contient des informations utilisées pour indiquer de manière unique un expéditeur.

5. Procédé de programmation de liaisons directes selon la revendication 4, dans lequel la trame d'interrogation est un paquet de données nul.

6. Procédé de programmation de liaisons directes selon la revendication 3, dans lequel les informations de programmation de liaisons directes comprennent en outre des informations sur une séquence de sondage des deux dispositifs terminaux sur chacune des multiples liaisons directes, et
l'instruction, par le point d'accès, aux deux dispositifs terminaux sur chacune des multiples liaisons directes d'effectuer séquentiellement l'opération de sondage comprend spécifiquement de :
envoyer, par le point d'accès, une trame de déclenchement de sondage, dans lequel la trame de déclenchement de sondage est utilisée pour donner l'instruction aux deux dispositifs terminaux sur chacune des multiples liaisons directes d'envoyer séquentiellement une trame de sondage conformément à la séquence de sondage, et la trame de sondage contient des informations utilisées pour indiquer de manière unique un expéditeur.

7. Procédé de programmation de liaisons directes selon la revendication 3, dans lequel la multidiffusion ou la diffusion, par le point d'accès, d'informations de programmation de liaisons directes comprend spécifiquement de :
multidiffuser ou diffuser, par le point d'accès, une trame de programmation, dans lequel la trame de programmation contient les informations de programmation de liaisons directes ; et
les informations programmation de liaisons directes comprennent en outre des informations sur une séquence de sondage des deux dispositifs terminaux sur chacune des multiples liaisons directes, et
l'instruction, par le point d'accès, aux deux dispositifs terminaux sur chacune des multiples liaisons directes d'effectuer séquentiellement l'opération de sondage consiste spécifiquement en ce que :
la trame de programmation est utilisée pour donner l'instruction aux deux dispositifs terminaux sur chacune des multiples liaisons directes, d'envoyer séquentiellement une trame de sondage en fonction de la séquence de sondage, et la trame de sondage contient des informations utilisées pour indiquer de manière unique un expéditeur.

8. Procédé de programmation de liaisons directes selon l'une quelconque des revendications 1 à 7, dans lequel les deux dispositifs terminaux sur l'une quelconque des multiples liaisons directes comprennent un dispositif terminal de première partie et un dispositif terminal de deuxième partie ; et
l'obtention, par le point d'accès, de résultats de sondage envoyés par les deux dispositifs terminaux sur chacune des multiples liaisons directes comprend spécifiquement de :
envoyer séparément, par le point d'accès, d'une première trame de requête et une seconde trame de requête, dans lequel la première trame de requête est utilisée pour donner l'instruction au dispositif terminal de première partie sur les multiples liaisons directes, d'envoyer, après réception de la première trame de requête, un résultat de sondage au point d'accès, et la seconde trame de requête est utilisée pour donner l'instruction au dispositif terminal de deuxième partie sur les multiples liaisons directes d'envoyer, après réception de la seconde trame de requête, un résultat de sondage au point d'accès ; ou
envoyer simultanément, par le point d'accès, des trames de requête aux deux dispositifs terminaux sur chacune des multiples liaisons directes, dans lequel les trames de requête sont utilisées pour donner l'instruction aux deux dispositifs terminaux sur chacune des multiples liaisons directes d'envoyer simultanément, après réception des trames de requête, des résultats de sondage au point d'accès ; ou
les informations de programmation de liaisons directes comprennent en outre des informations sur une séquence de signalisation des multiples liaisons directes, et l'obtention, par le point d'accès, de résultats de sondage envoyés par les deux dispositifs terminaux sur chacune des multiples liaisons directes, comprend spécifiquement de :
envoyer, par le point d'accès, des trames de déclenchement de signalisation aux deux dispositifs terminaux sur chacune des multiples liaisons directes, dans lequel les trames de déclenchement de signalisation sont utilisées pour donner l'instruction aux deux dispositifs terminaux sur chacune des multiples liaisons directes d'envoyer séquentiellement des résultats de sondage au point d'accès en fonction des informations sur la séquence de signalisation.

9. Procédé de programmation de liaisons directes selon la revendication 8, dans lequel, dans le cas où le point d'accès envoie séparément la première trame de requête et la seconde trame de requête, le procédé comprend en outre de :
donner en outre l'instruction, par le point d'accès, aux deux dispositifs terminaux sur chacune des multiples liaisons directes d'envoyer séquentiellement les résultats de sondage au point d'accès en utilisant un même sous-canal, et aux deux dispositifs terminaux sur une liaison directe différente d'envoyer des résultats de sondage au point d'accès en utilisant un sous-canal différent.

10. Procédé de programmation de liaisons directes, comprenant de :
recevoir, par un dispositif terminal, des informations de programmation de liaisons directes à partir d'un point d'accès, dans lequel les informations de programmation de liaisons directes comprennent des informations sur de multiples liaisons directes participant à une période programmée de liaisons directes suivante, et chacune des multiples liaisons directes est une liaison qui est établie par deux dispositifs terminaux associés au point d'accès et qui est utilisée pour la communication directe (étape 501, étape 601) ;
déterminer, par le dispositif terminal en fonction des informations de programmation de liaisons directes, s'il doit participer à la période programmée de liaisons directes (étape 502, étape 602) ; et
le cas échéant, effectuer, par le dispositif terminal, les étapes suivantes.
envoyer, par le dispositif terminal, un résultat de sondage au point d'accès pendant la période programmée de liaisons directes (étape 503, étape 604), recevoir, par le dispositif terminal, des informations sur la ressource de canal allouée par le point d'accès à la liaison directe sur laquelle se trouve le terminal (étape 504, étape 605) ; et
communiquer, par le dispositif terminal en utilisant la ressource de canal, avec un dispositif terminal situé à l'autre extrémité de la liaison directe sur laquelle se trouve le dispositif terminal (étape 505, étape 606), dans lequel
le résultat de sondage comprend des informations sur un sous-canal disponible ou un sous-canal indisponible pour le dispositif terminal, et dans lequel un sous-canal dans la ressource de canal ne comprend pas le sous-canal indisponible pour le dispositif terminal, ou est sélectionné parmi les sous-canaux disponibles pour le dispositif terminal ; et/ou
le résultat de sondage comprend des informations sur un terminal brouilleur, le terminal brouilleur faisant référence à un dispositif terminal brouillant le dispositif terminal, et qui se trouve sur une autre liaison directe des multiples liaisons directes programmées, à l'exception de la liaison directe sur laquelle se trouve le dispositif terminal, et des sous-canaux ou le temps de transmission dans les ressources de canal allouées respectivement à la liaison directe sur laquelle se trouve le dispositif terminal et à la liaison directe sur laquelle se trouve le terminal brouilleur du dispositif terminal est ou sont différents.

11. Procédé de programmation de liaisons directes selon la revendication 10, dans lequel si c'est le cas, le dispositif terminal exécute en outre l'étape suivante :
effectuer, par le dispositif terminal, une opération de sondage en fonction d'une indication du point d'accès dans la période programmée de liaisons directes.

12. Procédé de programmation de liaisons directes selon la revendication 11, dans lequel l'exécution par le dispositif terminal de l'opération de sondage en fonction de l'indication du point d'accès comprend spécifiquement de :
envoyer, par le dispositif terminal, une trame de sondage en fonction de l'indication du point d'accès, et la trame de sondage contient des informations utilisées pour indiquer de manière unique un expéditeur ;
détecter, par le dispositif terminal, une trame de sondage envoyée par un autre dispositif terminal sur les multiples liaisons directes, à l'exception du dispositif terminal ; et
enregistrer, par le dispositif terminal, le résultat de sondage, dans lequel le résultat de sondage comprend les informations sur le terminal brouilleur.

13. Procédé de programmation de liaisons directes selon la revendication 10, dans lequel les deux dispositifs terminaux sur l'une quelconque des multiples liaisons directes comprennent un dispositif terminal de première partie et un dispositif terminal de deuxième partie ; et
l'envoi, par le dispositif terminal, du résultat de sondage au point d'accès comprend spécifiquement de :
si le dispositif terminal est un terminal de première partie sur la liaison directe sur laquelle se trouve le dispositif terminal, envoyer, par le dispositif terminal, le résultat de sondage en même temps qu'un dispositif terminal de première partie, sur une autre liaison directe des multiples liaisons directes, à l'exception de la liaison directe sur laquelle se trouve le dispositif terminal, envoie un résultat de sondage ;
si le dispositif terminal est un terminal de deuxième partie sur la liaison directe sur laquelle se trouve le dispositif terminal, envoyer, par le dispositif terminal, le résultat de sondage en même temps qu'un dispositif terminal de deuxième partie, sur une autre liaison directe des multiples liaisons directes, à l'exception de la liaison directe sur laquelle se trouve le dispositif terminal, envoie un résultat de sondage ; ou
envoyer, par le dispositif terminal, le résultat de sondage en même temps que le dispositif terminal, situé à l'autre extrémité de la liaison directe sur laquelle se trouve le dispositif terminal, envoie un résultat de sondage ; ou
les informations de programmation de liaisons directes comprennent en outre des informations sur une séquence de signalisation des multiples liaisons directes, et
envoyer, par le dispositif terminal, le résultat de sondage au point d'accès en fonction des informations sur la séquence de signalisation.

14. Point d'accès (700, 800) configuré et destiné à exécuter l'un quelconque des procédés selon les revendications 1 à 9.

15. Dispositif terminal (900, 100) configuré et destiné à exécuter l'un quelconque des procédés selon les revendications 10 à 13.
